(19) 

Europäisches
Patentamt

European
Patent Office

Office européen
des brevets

(11) **EP 4 693 922 A1**

(12) **EUROPEAN PATENT APPLICATION**
published in accordance with Art. 153(4) EPC

(43) Date of publication:
**11.02.2026 Bulletin 2026/07**

(21) Application number: **23931585.6**

(22) Date of filing: **07.04.2023**

(51) International Patent Classification (IPC):
**H04B 7/0456** (2017.01)

(52) Cooperative Patent Classification (CPC):
**H04B 7/0413; H04B 7/0456**

(86) International application number:
**PCT/CN2023/087138**

(87) International publication number:
**WO 2024/207525 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **ZHANG, Zhenyu
Beijing 100085 (CN)**
• **GAO, Xueyuan
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **PRECODING MATRIX INDICATION METHOD AND APPARATUS**

(57)    The present disclosure relates to the field of communications, and provides a precoding matrix indication method and apparatus. The precoding matrix indication method comprises: according to preconfigured information, sending precoding matrix indication information to a user equipment (UE) which is provided with N antenna ports and carries out multiple-input multiple-output (MIMO) uplink transmission, wherein N is a positive even number, and the preconfigured information comprises a plurality of codewords determined according to a first codeword set corresponding to fully coherent transmissions or partially coherent transmissions of each layer from the first layer to the N/2-th layer of the N/2 antenna ports that correspond to the MIMO uplink transmission. Therefore, a precoding technology meeting transmission requirements of an enhanced antenna port is provided.

FIG. 2

EP 4 693 922 A1

**Description**

**TECHNICAL FIELD**

The present disclosure relates to the field of mobile communication technology, and specifically to a precoding matrix indication method and apparatus.

**BACKGROUND**

Precoding technology in multiple-input multiple-output (MIMO) wireless communication systems can effectively reduce interference and system overhead and improve system capacity, which is an extremely important technology in MIMO systems. In MIMO uplink systems based on codebook transmission, codebook design is also an important part of the precoding technology. A maximum number of antenna ports supported by a partial antenna coherent transmission codeword is 4 in the existing MIMO uplink transmission, that is, transmission of up to 4 antenna ports and up to 4 layers is only supported by the partial antenna coherent transmission codeword in the existing MIMO uplink transmission. When enhancement is performed on the antenna ports in the MIMO uplink transmission, the transmission requirements of the enhanced antenna ports cannot be met.

**SUMMARY**

The present disclosure provides a precoding matrix indication method and apparatus, a communication device and a storage medium.

According to a first aspect of embodiments of the present disclosure, a precoding matrix indication method is provided and performed by a network device, including:

sending, according to pre-configuration information, precoding matrix indication information to a user equipment (UE) having N antenna ports and performing multiple-input multiple-output (MIMO) uplink transmission, where N is a positive even number;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a second aspect of the embodiments of the present disclosure, a precoding matrix indication method is provided and performed by a user equipment (UE) having N antenna ports and performing multiple-input multiple-output (MIMO) uplink transmission, where N is a positive even number, including:

receiving precoding matrix indication information from a network device;
determining a partially-coherent codeword according to pre-configuration information and the precoding matrix indication information;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a third aspect of the embodiments of the present disclosure, a precoding matrix indication apparatus is provided, applied in a network device, including a communication module, configured to:

send, according to pre-configuration information, precoding matrix indication information to a user equipment (UE) having N antenna ports and performing multiple-input multiple-output (MIMO) uplink transmission, where N is a positive even number;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a fourth aspect of the embodiments of the present disclosure, a precoding matrix indication apparatus is provided, applied in a user equipment (UE) having N antenna ports and performing multiple-input multiple-output (MIMO) uplink transmission, where N is a positive even number, including:

a communication module, configured to receive precoding matrix indication information from a network device; and

a processing module, configured to determine a partially-coherent codeword according to pre-configuration information and the precoding matrix indication information;

in which the pre-configuration information comprises a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a fifth aspect of the embodiments of the present disclosure, a communication device is provided, including: a transceiver, a memory, and a processor connected to the transceiver and the memory, respectively. The processor is configured to execute computer-executable instructions on the memory, to control transmission and reception of radio signals of the transceiver and perform the method of the first aspect or the second aspect.

According to a sixth aspect of the embodiments of the present disclosure, a communication system is provided, including: a user equipment and a network device. The network device is configured to perform the method of the first aspect, and the user equipment is configured to perform the method of the second aspect.

According to a seventh aspect of the embodiments of the present disclosure, a computer storage medium having computer-executable instructions stored thereon is provided. When computer-executable instructions are executed by a processor, the method of the first aspect or the second aspect is implemented.

Additional aspects and advantages of the present disclosure will be given in part in the following description and in part will be obvious from the following description or learned through practice of the present disclosure.

## BRIEF DESCRIPTION OF THE DRAWINGS

The above and/or additional aspects and advantages of the present disclosure will become apparent and easily understood from the following description of the embodiments in conjunction with the accompanying drawings, in which:

FIG. 1 is a schematic diagram of a communication system according to an embodiment of the present disclosure;
FIG. 2 is a flowchart of a precoding matrix indication method according to an embodiment of the present disclosure;
FIG. 3 is a schematic diagram illustrating codeword selection according to an embodiment of the present disclosure;
FIG. 4 is a flowchart of a precoding matrix indication method according to an embodiment of the present disclosure;
FIG. 5 is a flowchart of a precoding matrix indication method according to an embodiment of the present disclosure;
FIG. 6 is a flowchart of a precoding matrix indication method according to an embodiment of the present disclosure;
FIG. 7 is a flowchart of a precoding matrix indication method according to an embodiment of the present disclosure;
FIG. 8 is a block diagram of a precoding matrix indication apparatus according to an embodiment of the present disclosure;
FIG. 9 is a block diagram of a precoding matrix indication apparatus according to an embodiment of the present disclosure;
FIG. 10 is a block diagram of a communication device according to an embodiment of the present disclosure; and
FIG. 11 is a block diagram of a chip according to an embodiment of the present disclosure.

## DETAILED DESCRIPTION

Embodiments of the present application aim to solve the technical problem that "when enhancement is performed on the antenna ports in the MIMO uplink transmission, the transmission requirements of the enhanced antenna ports cannot be met."

The embodiments of the present disclosure provide a precoding matrix indication method and apparatus, a communication device, a communication system and a storage medium.

According to a first aspect of embodiments of the present disclosure, a precoding matrix indication method is provided and performed by a network device, including:

sending, according to pre-configuration information, precoding matrix indication information to a user equipment (UE) having N antenna ports and performing multiple-input multiple-output (MIMO) uplink transmission, where N is a positive even number;

in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

In the above embodiment, the network device sends the precoding matrix indication information to the UE with N antenna ports and performing MIMO uplink transmission according to the pre-configuration information, in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission. In this way, a precoding technology that can meet the transmission requirements of the enhanced antenna ports is provided.

In combination with some embodiments of the first aspect, in some embodiments, a Euclidean distance between any two codewords in K codewords comprised in the pre-configuration information is greater than a preset distance threshold, and/or a sum of Euclidean distances between each two codewords in the K codewords comprised in the pre-configuration information is greater than or equal to a sum of Euclidean distances between each two codewords in any K codewords in the first codeword set;

or

a cosine similarity between any two codewords in K codewords comprised in the pre-configuration information is less than a preset similarity threshold, and/or a sum of cosine similarities between each two codewords in the K codewords comprised in the pre-configuration information is less than or equal to a sum of cosine similarities between each two codewords in any K codewords in the first codeword set.

In the above embodiment, one or more codewords that can cover the complete spatial range to the greatest extent may be selected from the corresponding first codeword set.

In combination with some embodiments of the first aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers and based on at least one of:

a codeword feature, in which the codeword feature comprises a Euclidean distance between codewords or a cosine similarity between codewords; or
a division mode of data of L layers among antenna port groups, where L is a positive integer less than or equal to N.

In the above embodiment, by determining the plurality codewords included in the pre-configuration information based on the codeword feature and/or the division mode of data of the L layers among antenna port groups, the amount of codewords may be reduced, thereby reducing the signaling overhead.

In combination with some embodiments of the first aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining one or more codewords from the first codeword set corresponding to each layer for the N/2 antenna ports according to the Euclidean distance between codewords or the cosine similarity between codewords; determining the plurality of codewords included in the pre-configuration information according to the one or more codewords.

In the above embodiment, by determining the one or more codewords from the first codeword set corresponding to each layer for the N/2 antenna ports according to the Euclidean distance between codewords or the cosine similarity between codewords and determining the plurality of codewords included in the pre-configuration information according to the one or more codewords, the amount of codewords may be reduced, thereby reducing the signaling overhead.

In combination with some embodiments of the first aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining, according to the division mode, one or more first codeword sets corresponding to one or more layers from the N/2 antenna ports and 1 layer to the N/2 antenna ports and N/2 layers; determining, according to the one or more first codeword sets, the plurality of codewords included in the pre-configuration information.

In the above embodiment, by determining, according to the division mode, the one or more first codeword sets corresponding to one or more layers from the N/2 antenna ports and 1 layer to the N/2 antenna ports and N/2 layers and determining the plurality of codewords included in the pre-configuration information according to the one or more first codeword sets, the amount of codewords may be reduced, thereby reducing the signaling overhead.

In combination with some embodiments of the first aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining one or more codewords from the first codeword set corresponding to each layer for the N/2 antenna ports according to the Euclidean distance between codewords or the cosine similarity between codewords; determining, according to the division mode, one or more first codeword sets corresponding to one or more layers from the N/2 antenna ports and 1 layer to the N/2 antenna ports and N/2 layers; determining, according to one or more codewords determined

EP 4 693 922 A1

from the one or more first codeword sets, the plurality of codewords included in the pre-configuration information.

In the above embodiment, by determining the one or more codewords from the first codeword set corresponding to each layer for the N/2 antenna ports according to the Euclidean distance between codewords or the cosine similarity between codewords, determining, according to the division mode, the one or more first codeword sets corresponding to one or more layers and determining the plurality of codewords included in the pre-configuration information according to one or more codewords determined from the one or more first codeword sets, the amount of codewords may be reduced, thereby reducing the signaling overhead.

In combination with some embodiments of the first aspect, in some embodiments, determining the one or more codewords from the first codeword set corresponding to each layer for the N/2 antenna ports includes:

a, selecting any one codeword Wa from the first codeword set into a first codeword subset;

b, selecting a codeword Wb from the first codeword set into the first codeword subset, in which the codeword Wb is a codeword with a minimum index among one or more codewords having a smallest cosine similarity with the codeword Wa in the first codeword set, or the codeword Wb is a codeword with a minimum index among one or more codewords having a largest Euclidean distance with the codeword Wa in the first codeword set;

c, selecting a codeword Wc from the first codeword set into the first codeword subset, in which the codeword Wc is a codeword with a minimum index among remaining one or more codewords in the first codeword set, with a smallest sum in respective sums of cosine similarities between each of the remaining one or more codewords and codewords in the first codeword subset and with a smallest variance in respective variances of the cosine similarities between each of the remaining one or more codewords and codewords in the first codeword subset; or the codeword Wc is a codeword with a minimum index among remaining one or more codewords in the first codeword set, with a largest sum in respective sums of Euclidean distances between each of the remaining one or more codewords and codewords in the first codeword subset and with a smallest variance in respective variances of the Euclidean distances between each of the remaining one or more codewords and codewords in the first codeword subset; and

d, repeating step c until the number of codewords in the first codeword subset reaches a preset number, and using the codewords in the first codeword subset as the one or more codewords.

In the above embodiment, one or more codewords that can cover the complete spatial range to the greatest extent may be selected from the corresponding first codeword set by performing steps a-d.

In combination with some embodiments of the first aspect, in some embodiments, all antenna ports are grouped into two groups including: a first antenna port group and a second antenna port group, and all antenna ports in the same antenna port group are used for the fully-coherent transmission and antenna ports from different antenna port groups are used for non-coherent transmission, the division mode includes grouping the data of the L layers into either or both of a first group and a second group according to a preset rule, in which the first group includes the first antenna port group, and the second group includes the second antenna port group.

In the above embodiment, all antenna ports are grouped into two antenna port groups, and data of the L layers is grouped into one antenna port group or two antenna port groups, thereby enabling antenna port enhancement.

In combination with some embodiments of the first aspect, in some embodiments, all antenna ports are grouped into four groups including: a first antenna port group, a second antenna port group, a third antenna port group and a fourth antenna port group, and all antenna ports in the same antenna port group are used for the fully-coherent transmission and antenna ports from different antenna port groups are used for non-coherent transmission, the division mode includes grouping the data of the L layers into either or both of a first group and a second group according to a preset rule, in which the first group includes the first antenna port group and the second antenna port group, and the second group includes the third antenna port group and the fourth antenna port group.

In the above embodiment, all antenna ports are grouped into four antenna port groups including the first to fourth antenna port groups, the first and second antenna port groups may be regarded as the first group, the third and fourth antenna port groups may be regarded as the second group, and the data of the L layers is grouped into one group or two groups, thereby enabling antenna port enhancement.

In combination with some embodiments of the first aspect, in some embodiments, data of $L_M$ layers in the data of the L layers is grouped into the first group and data of $L_N$ layers in the data of the L layers is grouped into the second group;

determining one or more first codeword sets corresponding to one or more layers from the N/2 antenna ports and 1 layer to the N/2 antenna ports and N/2 layers includes:
determining a first codeword set of N/2 antenna ports and $L_M$ layers and determining a first codeword set of N/2 antenna ports and $L_N$ layers;
in which $L_M$ and $L_N$ are all possible positive integers that satisfy a condition of:

5

$$L_M + L_N = L.$$

In the above embodiments, by grouping the data of the L layers into one group or two groups, one of the groups may include one antenna port group or two antenna port groups, thereby enabling antenna port enhancement.

In combination with some embodiments of the first aspect, in some embodiments, in a case that L is less than or equal to N/2, $L_M$ and $L_N$ also satisfy any of following conditions:

an absolute value of $L_M$-$L_N$ is less than or equal to 1; or
either one of $L_M$ and $L_N$ is equal to 0 and the other is equal to L.

In the above embodiment, when the absolute value of $L_M$-$L_N$ is less than or equal to 1, the data of the L layers can be grouped into two groups as evenly as possible, and when one of $L_M$ and $L_N$ is equal to 0 and the other is equal to L, the data of the L layers can be grouped into one group.

In combination with some embodiments of the first aspect, in some embodiments, in a case that L is greater than N/2, $L_M$ and $L_N$ also satisfy any of following conditions:

$L_M$ and $L_N$ are positive integers less than or equal to N/2, and an absolute value of $L_M$-$L_N$ is less than or equal to 1;
$L_M$ and $L_N$ are positive integers less than or equal to N/2, $L_M$ is less than or equal to $L_N$, and an absolute value of $L_M$-$L_N$ is less than or equal to 1; or
$L_M$ and $L_N$ are positive integers less than or equal to N/2.

In the above embodiment, since the number of transmission layers cannot exceed the number of antenna ports, $L_M$ and $L_N$ need to be less than or equal to N/2. When the absolute value of $L_M$-$L_N$ is less than or equal to 1, the data of the L layers can be divided into two groups as evenly as possible. When $L_M$ is less than or equal to $L_N$, and the absolute value of $L_M$-$L_N$ is less than or equal to 1, the data of the L layers can be divided into two groups as evenly as possible and the number of transmission layers of the first group is less than the number of transmission layers of the second group.

In combination with some embodiments of the first aspect, in some embodiments, determining the plurality of codewords included in the pre-configuration information includes:

determining the plurality of codewords comprised in the pre-configuration information by performing a combination transformation on codewords in the one or more first codeword sets or by performing a combination transformation on the one or more codewords.

In the above embodiment, by performing a combination transformation on codewords in the one or more first codeword sets or by performing a combination transformation on the one or more codewords, the partially-coherent codeword suitable for N antenna ports may be obtained.

In combination with some embodiments of the first aspect, in some embodiments, the precoding matrix indication information includes one codeword field, and the codeword field indicates one codeword in the pre-configuration information.

In the above embodiment, the codeword in the pre-configuration information is a partially-coherent codeword suitable for N antenna ports, so that the precoding matrix indication information may indicate one codeword in the pre-configuration information via one codeword field.

In combination with some embodiments of the first aspect, in some embodiments, determining the plurality of codewords included in the pre-configuration information includes:

determining codewords in the one or more first codeword sets or the one or more codewords as the plurality of codewords included in the pre-configuration information.

In the above embodiment, by directly determining codewords in the one or more first codeword sets or the one or more codewords as the plurality of codewords included in the pre-configuration information, a process of codeword design is simplified.

In combination with some embodiments of the first aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:

determining codewords in the first codeword set corresponding to each layer for the N/2 antenna ports as the plurality of codewords comprised in the pre-configuration information.

In the above embodiment, by directly determining codewords in the first codeword set corresponding to each layer for the N/2 antenna ports as the plurality of codewords comprised in the pre-configuration information, a process of codeword design is simplified.

In combination with some embodiments of the first aspect, in some embodiments, the precoding matrix indication information includes two codeword fields, and each codeword field indicates one codeword in the pre-configuration information.

In the above embodiment, the codeword in the pre-configuration information is a partially-coherent codeword suitable for N antenna ports, so that the precoding matrix indication information may indicate two codewords in the pre-configuration information via two codeword fields, and thus the UE may obtain the partially-coherent codeword suitable for N antenna ports according to the two indicated codewords.

According to a second aspect of embodiments of the present disclosure, a precoding matrix indication method is provided and performed by a UE with N antenna ports and performing MIMO uplink transmission, including:

receiving precoding matrix indication information from a network device;
determining a partially-coherent codeword according to pre-configuration information and the precoding matrix indication information;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

In combination with some embodiments of the second aspect, in some embodiments, a Euclidean distance between any two codewords in K codewords comprised in the pre-configuration information is greater than a preset distance threshold, and/or a sum of Euclidean distances between each two codewords in the K codewords comprised in the pre-configuration information is greater than or equal to a sum of Euclidean distances between each two codewords in any K codewords in the first codeword set;
or
a cosine similarity between any two codewords in K codewords comprised in the pre-configuration information is less than a preset similarity threshold, and/or a sum of cosine similarities between each two codewords in the K codewords comprised in the pre-configuration information is less than or equal to a sum of cosine similarities between each two codewords in any K codewords in the first codeword set.

In combination with some embodiments of the second aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers and based on at least one of:

a codeword feature, in which the codeword feature comprises a Euclidean distance between codewords or a cosine similarity between codewords; or
a division mode of data of the L layers among antenna port groups, where L is a positive integer less than or equal to N.

In combination with some embodiments of the second aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining one or more codewords from the first codeword set corresponding to each layer for the N/2 antenna ports according to the Euclidean distance between codewords or the cosine similarity between codewords; determining the plurality of codewords included in the pre-configuration information according to the one or more codewords.

In combination with some embodiments of the second aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining, according to the division mode, one or more first codeword sets corresponding to one or more layers from the N/2 antenna ports and 1 layer to the N/2 antenna ports and N/2 layers; determining, according to the one or more first codeword sets, the plurality of codewords included in the pre-configuration information.

In combination with some embodiments of the second aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining one or more codewords from the first codeword set corresponding to each layer for the N/2 antenna ports according to the Euclidean distance between codewords or the cosine similarity between codewords; determining, according to the division mode, one or more first codeword sets corresponding to one or more layers from the N/2 antenna ports and 1 layer to the N/2 antenna ports and N/2 layers; determining, according to one or more codewords determined from the one or more first codeword sets, the plurality of codewords included in the pre-configuration information.

**In** combination with some embodiments of the second aspect, in some embodiments, determining the one or more codewords from the first codeword set corresponding to each layer for the N/2 antenna ports includes:

a, selecting any one codeword Wa from the first codeword set into a first codeword subset;

b, selecting a codeword Wb from the first codeword set into the first codeword subset, in which the codeword Wb is a codeword with a minimum index among one or more codewords having a smallest cosine similarity with the codeword Wa in the first codeword set, or the codeword Wb is a codeword with a minimum index among one or more codewords having a largest Euclidean distance with the codeword Wa in the first codeword set;

c, selecting a codeword Wc from the first codeword set into the first codeword subset, in which the codeword Wc is a codeword with a minimum index among remaining one or more codewords in the first codeword set, with a smallest sum in respective sums of cosine similarities between each of the remaining one or more codewords and codewords in the first codeword subset and with a smallest variance in respective variances of the cosine similarities between each of the remaining one or more codewords and codewords in the first codeword subset; or the codeword Wc is a codeword with a minimum index among remaining one or more codewords in the first codeword set, with a largest sum in respective sums of Euclidean distances between each of the remaining one or more codewords and codewords in the first codeword subset and with a smallest variance in respective variances of the Euclidean distances between each of the remaining one or more codewords and codewords in the first codeword subset; and

d, repeating step c until the number of codewords in the first codeword subset reaches a preset number, and using the codewords in the first codeword subset as the one or more codewords.

**In** combination with some embodiments of the second aspect, in some embodiments, all antenna ports are grouped into two groups including: a first antenna port group and a second antenna port group, and all antenna ports in the same antenna port group are used for the fully-coherent transmission and antenna ports from different antenna port groups are used for non-coherent transmission, the division mode includes grouping the data of the L layers into either or both of a first group and a second group according to a preset rule, in which the first group includes the first antenna port group, and the second group includes the second antenna port group.

**In** combination with some embodiments of the second aspect, in some embodiments, all antenna ports are grouped into four groups including: a first antenna port group, a second antenna port group, a third antenna port group and a fourth antenna port group, and all antenna ports in the same antenna port group are used for the fully-coherent transmission and antenna ports from different antenna port groups are used for non-coherent transmission, the division mode includes grouping the data of the L layers into either or both of a first group and a second group according to a preset rule, in which the first group includes the first antenna port group and the second antenna port group, and the second group includes the third antenna port group and the fourth antenna port group.

**In** combination with some embodiments of the second aspect, in some embodiments, data of $L_M$ layers in the data of the L layers is grouped into the first group and data of $L_N$ layers in the data of the L layers is grouped into the second group;

determining one or more first codeword sets corresponding to one or more layers from the N/2 antenna ports and 1 layer to the N/2 antenna ports and N/2 layers includes:

determining a first codeword set of N/2 antenna ports and $L_M$ layers and determining a first codeword set of N/2 antenna ports and $L_N$ layers;

in which $L_M$ and $L_N$ are all possible positive integers that satisfy a condition of:

$$L_M + L_N = L.$$

In combination with some embodiments of the second aspect, in some embodiments, in a case that L is less than or equal to N/2, $L_M$ and $L_N$ also satisfy any of following conditions:

an absolute value of $L_M$-$L_N$ is less than or equal to 1; or
either one of $L_M$ and $L_N$ is equal to 0 and the other is equal to L.

In combination with some embodiments of the second aspect, in some embodiments, in a case that L is greater than N/2, $L_M$ and $L_N$ also satisfy any of following conditions:

$L_M$ and $L_N$ are positive integers less than or equal to N/2, and an absolute value of $L_M$-$L_N$ is less than or equal to 1;
$L_M$ and $L_N$ are positive integers less than or equal to N/2, $L_M$ is less than or equal to $L_N$, and an absolute value of $L_M$-$L_N$ is less than or equal to 1; or

$L_M$ and $L_N$ are positive integers less than or equal to N/2.

In combination with some embodiments of the second aspect, in some embodiments, determining the plurality of codewords included in the pre-configuration information includes:
determining the plurality of codewords comprised in the pre-configuration information by performing a combination transformation on codewords in the one or more first codeword sets or by performing a combination transformation on the one or more codewords.

In combination with some embodiments of the second aspect, in some embodiments, the precoding matrix indication information includes one codeword field, and the codeword field indicates one codeword in the pre-configuration information;

determining the partially-coherent codeword according to the pre-configuration information and the precoding matrix indication information includes:
determining the partially-coherent codeword according to the codeword indicated by the codeword field of the precoding matrix indication information.

In combination with some embodiments of the second aspect, in some embodiments, determining the plurality of codewords included in the pre-configuration information includes:
determining codewords in the one or more first codeword sets or the one or more codewords as the plurality of codewords included in the pre-configuration information.

In combination with some embodiments of the second aspect, in some embodiments, the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining codewords in the first codeword set corresponding to each layer for the N/2 antenna ports as the plurality of codewords comprised in the pre-configuration information.

In combination with some embodiments of the second aspect, in some embodiments, the precoding matrix indication information includes two codeword fields, and each codeword field indicates one codeword in the pre-configuration information;

determining the partially-coherent codeword according to the pre-configuration information and the precoding matrix indication information includes:
determining the partially-coherent codeword by performing combination transformation on codewords indicated by the two codeword fields of the precoding matrix indication information.

According to a third aspect of embodiments of the present disclosure, a precoding matrix indication apparatus is provided and applied in a network device, including a communication module, configured to:

send, according to pre-configuration information, precoding matrix indication information to a user equipment (UE) having N antenna ports and performing multiple-input multiple-output (MIMO) uplink transmission, where N is a positive even number;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a fourth aspect of embodiments of the present disclosure, a precoding matrix indication apparatus is provided and applied in a UE with N antenna ports and performing MIMO uplink transmission, including:

a communication module, configured to receive precoding matrix indication information from a network device;
a processing module, configured to determine a partially-coherent codeword according to pre-configuration information and the precoding matrix indication information;
in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

According to a fifth aspect of embodiments of the present disclosure, a communication device is provided, including a transceiver, a memory, and a processor connected to the transceiver and the memory, respectively. The processor is configured to execute computer-executable instructions on the memory, to control transmission and reception of radio signals of the transceiver and perform the method of the first aspect, alterative implementations of the first aspect, the second aspect, or alterative implementations of the second aspect.

According to a sixth aspect of embodiments of the present disclosure, a communication system is provided, including: a user equipment and a network device. The network device is configured to perform the method of the first aspect or alterative implementations of the first aspect, and the user equipment is configured to perform the method of the second aspect alterative implementations of the second aspect.

According to a seventh aspect of the embodiments of the present disclosure, a computer storage medium having computer-executable instructions stored thereon is provided. When computer-executable instructions are executed by a processor, the method of the first aspect, alterative implementations of the first aspect, the second aspect, or alterative implementations of the second aspect is implemented.

According to an eighth aspect of the embodiments of the present disclosure, a computer program product is provided. When computer program product is executed by a communication device, the communication device is caused to perform the method of the first aspect, alterative implementations of the first aspect, the second aspect, or alterative implementations of the second aspect.

According to a ninth aspect of the embodiments of the present disclosure, a computer program is provided. When computer program is running on a computer, the computer is caused to perform the method of the first aspect, alterative implementations of the first aspect, the second aspect, or alterative implementations of the second aspect.

**It** can be understood that the above-mentioned precoding matrix indication apparatus, precoding matrix determination apparatus, communication device, communication system, storage medium, program product, and computer program are all used to execute the method proposed in the embodiment of the present disclosure. Therefore, regarding the beneficial effects that can be achieved, reference may be made to the beneficial effects in the corresponding method, which will not be repeated here.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In the embodiments of the present disclosure, descriptions such as "at least one of A, B, C...", "A and/or B and/or C...", etc. include the case where any one of A, B, C... exists alone, and also include any combination of any multiple ones of A, B, C..., and each case may exist alone. For example, "at least one of A, B, or C" includes the case where A exists alone, the case where B exists alone, the case where C exists alone, the combination of A and B, the combination of A and C, the combination of B and C, and the combination of A, B, and C. For example, A and/or B includes the case where A exists alone, the case where B exists alone, and the combination of A and B.

In some embodiments, the descriptions such as "in one case, A; in another case, B", "in response to one case, A; in response to another case, B", etc. may include the following technical solutions according to situations: A is executed independently of B, that is, in some embodiments, A; B is executed independently of A, that is, in some embodiments, B; A and B are selectively executed, that is, in some embodiments, one is selected from A and B to be executed; both A and B are executed, that is, in some embodiments, A and B. When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is " apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, the terms such as "in response to...", "in response to determining...", "in the case of...", "at the time of...", "when...", "if...", "if...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus, etc. can be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" can be used interchangeably.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like can be used interchangeably.

In some embodiments, the access network device, the core network device, or the network device can be replaced by the terminal. For example, various embodiments of the present disclosure can also be applied to a structure in which the communication between the access network device, the core network device, or the network device and the terminal is replaced by the communication between multiple terminals (for example, it can also be referred to as device-to-device (D2D), vehicle-to-everything (V2X), etc.). In this case, the terminal can be set to have a structure that has all or part of functions of the access network device. In addition, the language such as "uplink" and "downlink" can also be replaced by the language corresponding to the communication between the terminals (for example, "side"). For example, the uplink channel, the downlink channel, etc. can be replaced by the side channel, and the uplink, the downlink, etc. can be replaced by the side link.

In some embodiments, the terminal may be replaced by the access network device, the core network device, or the network device. In this case, the access network device, the core network device, or the network device may also be configured to have a structure that has all or part of functions of the terminal.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "symbol", "code element", "codebook", "codeword", "codepoint", "bit", "data", "program", and "chip" can be used interchangeably.

In some embodiments, the terms such as "uplink", "uplink", "physical uplink" can be interchangeable, and terms such as "downlink", "downlink", "physical downlink" can be interchangeable, and the terms such as "side", "sidelink", "side communication", "sidelink communication", "direct connection", "direct link", "direct communication", "direct link communication" can be interchangeable.

In some embodiments, the terms "downlink control information (DCI)", "downlink (DL) assignment", "DL DCI", "uplink (UL) grant", "UL DCI" and the like may be used interchangeably.

In some embodiments, the terms such as "physical downlink shared channel (PDSCH)", "DL data" and the like can be interchangeable, and the terms such as "physical uplink shared channel (PUSCH)", "UL data" and the like can be interchangeable.

In some embodiments, the terms "radio", "wireless", "radio access network (RAN)", "access network (AN)", "RAN-based" and the like may be used interchangeably.

In some embodiments, the terms "search space", "search space set", "search space configuration", "search space set configuration", "control resource set (CORESET)", "CORESET configuration" and the like may be interchangeable.

In some embodiments, terms such as "synchronization signal (SS)", "synchronization signal block (SSB)", "reference signal (RS)", "pilot", "pilot signal" and the like can be used interchangeably.

In some embodiments, the terms such as "moment", "time point", "time", "time position" and the like can be interchangeable, and the terms such as "duration", "period", "time window", "window", "time" and the like can be interchangeable.

In some embodiments, the terms "component carrier (CC)", "cell", "frequency carrier", "carrier frequency" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and the like can be used interchangeably.

In some embodiments, the terms such as "wireless access scheme", "waveform", etc. may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" and the like can be used interchangeably.

In some embodiments, the terms such as "frame", "radio frame", "subframe", "slot", "sub-slot", "mini-slot", "symbol", "symbol", "transmission time interval (TTI)" and so on can be used interchangeably.

In some embodiments, "obtain", "acquire", "get", "receive", "transmit", "bidirectional transmission", "send and/or receive" can be interchangeable, and can be interpreted as receiving from other entities, obtaining from a protocol, obtaining by selfprocessing, autonomous implementation, etc.

In some embodiments, the terms such as "send", "transmit", "report", "issue", "transmit", "bi-directionally transmit", "send and/or receive" and the like can be used interchangeably.

In some embodiments, "predetermined" or "preset" may be interpreted as being pre-specified in a protocol, etc., or may be interpreted as an apparatus performing a pre-set action, etc.

In some embodiments, "determining" can be interpreted as "judging", "deciding", "judging", "calculating", "computing", "processing", "deriving", "investigating", "searching", "looking up", "searching", "inquiring", "ascertaining", "receiving", "transmitting", "inputting", "outputting, "accessing", "resolving", "selecting", "choosing", "establishing", "comparing", "assuming", "expecting", "considering", "broadcasting", "notifying", "communicating", "forwarding", "configuring", "reconfiguring", "allocating", "mapping", "assigning", etc., but is not limited to the above.

In some embodiments, the determination or judgment may be performed by a value represented by 1 bit (0 or 1), or by a true/false value (Boolean value) represented by true or false, or by comparison of numerical values (for example, comparison with a predetermined value), but is not limited thereto.

In some embodiments, "network" may be interpreted as apparatuses included in the network (e.g., access network device, core network device, etc.).

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

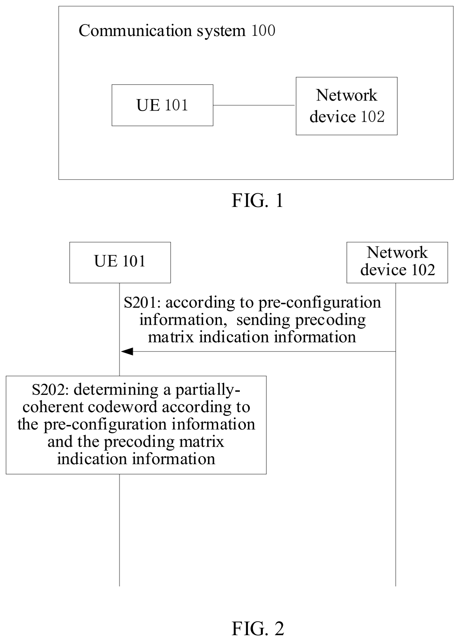

FIG. 1 is a schematic diagram of a communication system according to an embodiment of the present disclosure. As shown in FIG. 1, the communication system 100 may include a terminal or user equipment (UE) 101 and a network device 102. The network device 102 may include an access network device or a core network device.

In some embodiments, the UE 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

In some embodiments, the access network device may be, for example, a node or device that accesses a terminal to a wireless network. The access network device may include at least one of an evolved NodeB (eNB), a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited thereto.

In some embodiments, the core network device may be a device including one or more network elements, or may be a plurality of devices or device groups, each including all or part of one or more network elements. The network element may be virtual or physical. The core network may include, for example, at least one of an Evolved Packet Core (EPC), a 5G Core Network (5GCN), or a Next Generation Core (NGC).

In some embodiments, the above-mentioned one or more network elements may include, for example: policy control function (PCF), application function (AF), network application function (NAF), application layer authentication and key management for applications anchor function (AAnF), bootstrapping server functionality (BSF), access and mobility management function (AMF), user plane function (UPF), session management function (SMF), mobility management entity (MME), etc.

**In** some embodiments, the above-mentioned PCF, AF, NAF, AAnF, BSF, AMF, UPF, SMF, and MME are used for "function limitation", and their names are not limited thereto.

**In** some embodiments, the above-mentioned PCF, AF, NAF, AAnF, BSF, AMF, UPF, SMF, and MME may be independent of the core network device.

**In** some embodiments, the above-mentioned PCF, AF, NAF, AAnF, BSF, AMF, UPF, SMF, and MME may be part of the core network device 103.

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the subjects shown in FIG. 1, but are not limited thereto. The subjects shown in FIG. 1 are examples, and the communication system may include all or part of the subjects in FIG. 1, or may include other subjects other than those shown in FIG. 1, and the number and form of the subjects are arbitrary, and the connection relationships between the subjects are examples, and the subjects may be connected or disconnected, and the connection may be in any manner, which may be a direct connection or an indirect connection, and may be a wired connection or a wireless connection.

Precoding technology in multiple-input multiple-output (MIMO) systems can effectively reduce interference and system overhead and improve system capacity, which is an extremely important technology in MIMO systems. In MIMO uplink systems based on codebook transmission, codebook design is also an important part of the precoding technology. A maximum number of antenna ports supported by a partial antenna coherent transmission codeword is 4 in the existing MIMO uplink transmission, that is, transmission of up to 4 antenna ports and up to 4 layers is only supported by the partial antenna coherent transmission codeword in the existing MIMO uplink transmission. When enhancement is performed on the antenna ports in the MIMO uplink transmission, the transmission requirements of the enhanced antenna ports cannot be met.

Accordingly, in order to achieve the antenna port enhancement in the MIMO uplink transmission, it is urgent to provide a codeword design method that supports transmission of more layers and larger antenna ports, as well as a corresponding precoding matrix indication and determination method.

Therefore, the embodiments of the present disclosure provide a precoding matrix indication and determination method and apparatus, a communication device, a communication system, and a storage medium based on a codeword design that supports transmission of more layers and larger antenna ports, thereby meeting the transmission requirements of enhanced antenna ports.

In the codeword design provided in the embodiments of the present disclosure, the partially-coherent transmission codeword corresponding to each layer from 1 layer to N layers for N antenna ports is determined based on the first codeword set that is used for the fully-coherent transmission or partially-coherent transmission corresponding to each layer from N/2 antenna ports and 1 layer to N/2 antenna ports and N/2 layers.

FIG. 2 is an interactive schematic diagram of a precoding matrix indication method according to an embodiment of the present disclosure. As shown in FIG. 2, the precoding matrix indication method involved in the embodiment of the present disclosure is used in a communication system 100, and the method includes the following steps.

At step S201, according to pre-configuration information, the network device 102 sends precoding matrix indication information to a UE having N antenna ports and performing MIMO uplink transmission, where N is a positive even number.

In some embodiments, the UE 101 may receive pre-configured matrix indication information sent by network device 102.

In some embodiments, the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

In some embodiments, the network device may pre-negotiate the pre-configuration information with the UE and store it in the network device and the UE respectively.

In some embodiments, a Euclidean distance between any two codewords in K codewords included in the pre-configuration information is greater than a preset distance threshold, and/or a sum of Euclidean distances between each two codewords in the K codewords included in the pre-configuration information is greater than or equal to a sum of Euclidean distances between each two codewords in any K codewords in the first codeword set.

The present disclosure does not limit how to determine the preset distance threshold, as long as the preset distance threshold enables the selected K codewords to cover the complete spatial range to the greatest extent. In addition, when the sum of the Euclidean distances between each two codewords in the K codewords included in the pre-configuration information is equal to the sum of the Euclidean distances between each two codewords in any K codewords in the first codeword set, it indicates that the any K codewords in the first codeword set are the K codewords included in the pre-configuration information. In some embodiments, a cosine similarity between any two codewords in K codewords included in the pre-configuration information is less than a preset similarity threshold, and/or a sum of cosine similarities between each two codewords in the K codewords included in the pre-configuration information is less than or equal to a sum of cosine similarities between each two codewords in any K codewords in the first codeword set.

The present disclosure does not limit how to determine the preset similarity threshold, as long as the preset similarity threshold enables the selected K codewords to cover the complete spatial range to the greatest extent. In addition, when the sum of the cosine similarities between each two codewords in the K codewords included in the pre-configuration information is equal to the sum of the cosine similarities between each two codewords in any K codewords in the first codeword set, it indicates that the any K codewords in the first codeword set are the K codewords included in the pre-configuration information.

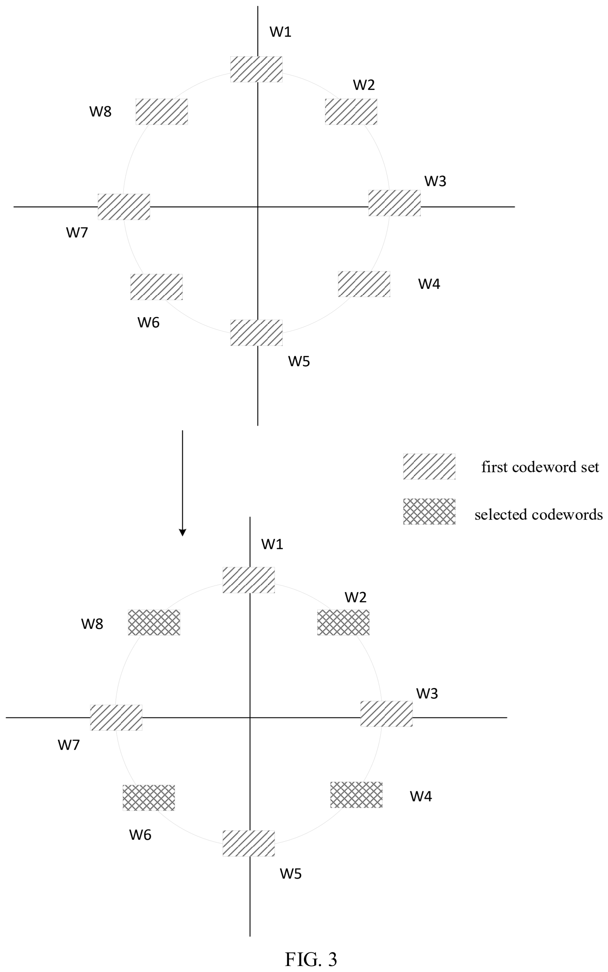

Referring to FIG. 3, the upper half of FIG. 3 shows that a first codeword set includes 8 codewords W1-W8, and the lower half of FIG. 3 shows K (4 in this example) codewords W2, W4, W6 and W8 determined from the first codeword set according to a preset distance threshold. In addition, as shown in FIG. 3, the sum of the Euclidean distances between every two codewords (i.e., the Euclidean distance between W2 and W4, the Euclidean distance between W2 and W6, the Euclidean distance between W2 and W8, the Euclidean distance between W4 and W6, and the Euclidean distance between W6 and W8) of the determined codewords W2, W4, W6 and W8 may also be less than or equal to the sum of the Euclidean distances between every two codewords in any 4 codewords in the first codeword set. When equal, it indicates that the 4 codewords are the selected 4 codewords.

Similarly, multiple codewords may also be selected according to a preset similarity threshold.

In some embodiments, the pre-configuration information is determined according to the first codeword set that is used for fully-coherent transmission or partially-coherent transmission and corresponds to each layer in N/2 antenna ports and 1 layer to N/2 antenna ports and N/2 layers corresponding to the MIMO uplink transmission and based on at least one of the following:

a codeword feature, in which the codeword feature comprises a Euclidean distance between codewords or a cosine similarity between codewords; or
a division mode of data of L layers among antenna port groups, where L is a positive integer less than or equal to N.

The Euclidean distance between codewords may be expressed by the F-normal form of the codewords.

Specifically, for example, the multiple codewords included in the pre-configuration information may be determined according to the codeword feature and/or the division mode in any of the following manners.

First Manner:

The plurality of codewords included in the pre-configuration information may be determined based on the Euclidean distance between codewords or the cosine similarity between codewords, and according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission, where L is a positive integer less than or equal to N.

In some embodiments, the pre-configuration information is determined according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission through the following steps:

determining one or more codewords from the first codeword set corresponding to each layer for the N/2 antenna ports according to the Euclidean distance between codewords or the cosine similarity between codewords; and determining the plurality of codewords included in the pre-configuration information according to the one or more codewords.

Specifically, taking N being 8 as an example, one or more codewords may be determined from the first codeword set corresponding to each layer for four antenna ports according to the Euclidean distance between codewords or the cosine similarity between codewords.

For example, taking the first codeword set that is used for the fully-coherent transmission and corresponds to 4 antenna ports and 1 layer as an example, the fully-coherent transmission codewords for the 4 antenna ports and 1 layer include 16 codewords as shown below:

Table 1

| | | | | | | | |
|---|---|---|---|---|---|---|---|
| $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ |
| $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ |

One or more codewords may be determined from the first codeword set including the 16 codewords according to the Euclidean distance between codewords or the cosine similarity between codewords.

In some embodiments, selecting the one or more codewords from the first codeword set corresponding to each layer for the N/2 antenna ports includes:

a, selecting any one codeword Wa from the first codeword set into a first codeword subset;

**b,** selecting a codeword Wb from the first codeword set into the first codeword subset, in which the codeword Wb is a codeword with a minimum index among one or more codewords having a smallest cosine similarity with the codeword Wa in the first codeword set, or the codeword Wb is a codeword with a minimum index among one or more codewords having a largest Euclidean distance with the codeword Wa in the first codeword set;

c, selecting a codeword Wc from the first codeword set into the first codeword subset, in which the codeword Wc is a codeword with a minimum index among remaining one or more codewords in the first codeword set, with a smallest sum in respective sums of cosine similarities between each of the remaining one or more codewords and codewords in the first codeword subset and with a smallest variance in respective variances of the cosine similarities between each of the remaining one or more codewords and codewords in the first codeword subset; or the codeword Wc is a codeword with a minimum index among remaining one or more codewords in the first codeword set, with a largest sum in respective sums of Euclidean distances between each of the remaining one or more codewords and codewords in the first codeword subset and with a smallest variance in respective variances of the Euclidean distances between each of the remaining one or more codewords and codewords in the first codeword subset; and

d, repeating step c until the number of codewords in the first codeword subset reaches a preset number, and using the codewords in the first codeword subset as the one or more codewords.

For example, taking the first codeword set that is used for the fully-coherent transmission and corresponds to 4 antenna ports and 2 layers as an example, the fully-coherent transmission codewords for the 4 antenna ports and 2 layers include 8 codewords, respectively represented by $W^2_1$- $W^2_8$. Assume that it is expected to select 4 codewords from the 8 codewords, that is, the preset number is 4, and the cosine similarity between any two codewords between the 8 codewords is shown in Table 2 below:

Table 2

| codeword | $W^2_1$ | $W^2_2$ | $W^2_3$ | $W^2_4$ | $W^2_5$ | $W^2_6$ | $W^2_7$ | $W^2_3$ |
|---|---|---|---|---|---|---|---|---|
| $W^2_1$ | 1.0000 | 0.5000 | 0.5000 | 0.2500 | 0 | 0 | 0.5000 | 0.2500 |
| $W^2_2$ | 0.5000 | 1.0000 | 0.2500 | 0.5000 | 0 | 0 | 0.2500 | 0.5000 |
| $W^2_3$ | 0.5000 | 0.2500 | 1.0000 | 0.5000 | 0.2500 | 0.2500 | 0 | 0 |
| $W^2_4$ | 0.2500 | 0.5000 | 0.5000 | 1.0000 | 0.2500 | 0.5000 | 0 | 0 |
| $W^2_5$ | 0 | 0 | 0.5000 | 0.2500 | 1.0000 | 0.5000 | 0.5000 | 0.2500 |
| $W^2_6$ | 0 | 0 | 0.2500 | 0.5000 | 0.5000 | 1.0000 | 0.2500 | 0.5000 |
| $W^2_7$ | 0.5000 | 0.2500 | 0 | 0 | 0.5000 | 0.2500 | 1.0000 | 0.5000 |
| $W^2_8$ | 0.2500 | 0.5000 | 0 | 0 | 0.2500 | 0.5000 | 0.5000 | 1.0000 |

In the first step, a first codeword $W^2_1$ is selected as an initial codeword of the first codeword subset;
In the second step, based on the cosine similarity between any two codewords, a codeword with a minimum index among one or more codewords having a smallest cosine similarity with the codeword $W^2_1$ is selected. From table 2, the cosine similarity between $W^2_3$ and $W^2_1$ is 0, the cosine similarity between $W^2_6$ and $W^2_1$ is 0, and then the codeword $W^2_5$ with the smaller index is selected.

In the third step, based on the cosine similarity between any two codewords, a codeword with a minimum index among remaining one or more codewords is selected, with a smallest sum in respective sums of cosine similarities between each the remaining one or more codewords and the codewords $W^2_1$ and $W^2_5$, and with a smallest variance in respective variances of the cosine similarities between each the remaining one or more codewords and the codewords $W^2_1$ and $W^2_5$. From table 2, the sum of the cosine similarity between $W^2_2$ and $W^2_1$ and the cosine similarity between $W^2_2$ and $W^2_5$ is 0.5, the sum of the cosine similarity between $W^2_4$ and $W^2_1$ and the cosine similarity between $W^2_4$ and $W^2_5$ is 0.5, the sum of the cosine similarity between $W^2_6$ and $W^2_1$ and the cosine similarity between $W^2_6$ and $W^2_5$ is 0.5, the sum of the cosine similarity between $W^2_8$ and $W^2_1$ and the cosine similarity between $W^2_8$ and $W^2_5$ is 0.5; the variance of the cosine similarity between $W^2_4$ and $W^2_1$ and the cosine similarity between $W^2_4$ and $W^2_5$, and the variance of the cosine similarity between $W^2_8$ and $W^2_1$ and the cosine similarity between $W^2_8$ and $W^2_5$ are less than the variance of the cosine similarity between $W^2_2$ and $W^2_1$ and the cosine similarity between $W^2_2$ and $W^2_5$, and the variance of the cosine similarity between $W^2_6$ and $W^2_1$ and the cosine similarity between $W^2_6$ and $W^2_5$, then the codeword $W^2_4$ with the minimum index is selected.

The above third step is repeated, in the remaining codewords, the sum of the cosine similarity between $W^2_8$ and $W^2_1$, the cosine similarity between $W^2_8$ and $W^2_4$ and the cosine similarity between $W^2_8$ and $W^2_5$ is the smallest, then the codeword $W^2_8$ is selected.

After four codewords are selected, the above process ends, and the selected codewords are: $W^2_1$, $W^2_4$, $W^2_5$, and $W^2_8$.

The fully-coherent transmission codewords for the 4 antenna ports and 2 layers include 8 codewords as shown below:

Table 3

$$\frac{1}{2\sqrt{2}}\begin{bmatrix} 1 & 1 \\ 1 & 1 \\ 1 & -1 \\ 1 & -1 \end{bmatrix} \quad \frac{1}{2\sqrt{2}}\begin{bmatrix} 1 & 1 \\ 1 & 1 \\ j & -j \\ j & -j \end{bmatrix} \quad \frac{1}{2\sqrt{2}}\begin{bmatrix} 1 & 1 \\ j & j \\ 1 & -1 \\ j & -j \end{bmatrix} \quad \frac{1}{2\sqrt{2}}\begin{bmatrix} 1 & 1 \\ j & j \\ j & -j \\ -1 & 1 \end{bmatrix}$$

(continued)

$$\frac{1}{2\sqrt{2}}\begin{bmatrix} 1 & 1 \\ -1 & -1 \\ 1 & -1 \\ -1 & 1 \end{bmatrix} \quad \frac{1}{2\sqrt{2}}\begin{bmatrix} 1 & 1 \\ -1 & -1 \\ j & -j \\ -j & j \end{bmatrix} \quad \frac{1}{2\sqrt{2}}\begin{bmatrix} 1 & 1 \\ -j & -j \\ 1 & -1 \\ -j & j \end{bmatrix} \quad \frac{1}{2\sqrt{2}}\begin{bmatrix} 1 & 1 \\ -j & -j \\ j & -j \\ 1 & -1 \end{bmatrix}$$

Thus, the selected codewords are $\frac{1}{2\sqrt{2}}\begin{bmatrix} 1 & 1 \\ 1 & 1 \\ 1 & -1 \\ 1 & -1 \end{bmatrix}, \frac{1}{2\sqrt{2}}\begin{bmatrix} 1 & 1 \\ j & j \\ j & -j \\ -1 & 1 \end{bmatrix}, \frac{1}{2\sqrt{2}}\begin{bmatrix} 1 & 1 \\ -1 & -1 \\ 1 & -1 \\ -1 & 1 \end{bmatrix}$ and

$\frac{1}{2\sqrt{2}}\begin{bmatrix} 1 & 1 \\ -j & -j \\ j & -j \\ 1 & -1 \end{bmatrix}$ .

The above example is described using the cosine similarity between codewords, but those skilled in the art will appreciate that codeword selection may also be performed based on other codeword features such as the Euclidean distance between codewords.

Similarly, based on the Euclidean distance between codewords or the cosine similarity between codewords, one or more codewords may be determined from the first codeword set corresponds to 4 antenna ports and 2 layers, one or more codewords may be determined from the first codeword set corresponds to 4 antenna ports and 3 layers, and one or more codewords may be determined from the first codeword set corresponds to 4 antenna ports and 4 layers.

Then, the multiple codewords included in the pre-configuration information may be determined according to the one or more codewords determined from the first codeword set corresponds to each layer for the four antenna ports.

Optionally, in some embodiments, determining the plurality of codewords included in the pre-configuration information includes:

determining the plurality of codewords included in the pre-configuration information by performing a combination transformation on the determined one or more codewords.

In an example, one or more codewords determined from the first codeword set that is used for the fully-coherent transmission and corresponds to 4 antenna ports and 1 layer include $W^1_1$, $W^1_3$, $W^1_4$, $W^1_6$, $W^1_9$, $W^1_{11}$ ; one or more codewords determined from the first codeword set that is used for the fully-coherent transmission and corresponds to 4 antenna ports and 2 layers include $W^2_1$, $W^2_4$, $W^2_5$, $W^2_8$; one or more codewords determined from the first codeword set that is used for the fully-coherent transmission and corresponds to 4 antenna ports and 3 layers include $W^3_1$, $W^3_4$ ; one or more codewords determined from the first codeword set that is used for the fully-coherent transmission and corresponds to 4 antenna ports and 4 layers include $W^4_1$. The partially-coherent codeword included in the pre-configuration information may be determined by performing combination transformation on the above codewords. As shown in the above example, the number of codewords obtained by codeword combination transformation is: $(6+4+2+1)^2=169$, and the number of codewords obtained by combining the above codewords with an empty matrix is $(6+4+2+1)*2=26$. Therefore, the number of partially-coherent codewords for two antenna port groups included in the pre-configuration information is 195.

If codeword selection is not performed based on the Euclidean distance between codewords or the cosine similarity between codewords, since the fully-coherent transmission codewords corresponding to 4 antenna ports and 1 layer include 16 codewords, the fully-coherent transmission codewords corresponding to 4 antenna ports and 2 layers include 8 codewords, the fully-coherent transmission codewords corresponding to 4 antenna ports and 3 layers include 4 codewords, and the fully-coherent transmission codewords corresponding to 4 antenna ports and 4 layers include 2 codewords, the total number of partially-coherent codewords for the two antenna port groups obtained by the codeword combination transformation may be $(16+8+4+2)^2+2*(16+8+4+2)=960$.

According to the embodiments of the present disclosure, by selecting codewords based on the Euclidean distance between codewords or the cosine similarity between codewords, the amount of codewords is reduced, thereby reducing signaling overhead.

In an embodiment, the precoding matrix indication information includes one codeword field, and the codeword field is used to indicate one codeword in the pre-configuration information.

When the codewords included in the pre-configuration information are obtained by performing combination transformation on the determined one or more codewords, the precoding matrix indication information may include 1 codeword field to indicate one codeword in the pre-configuration information. For example, referring to the above example, the pre-configuration information includes 195 codewords, then the 1 codeword field may indicate one of the 195 codewords as a partially-coherent codeword of 8 antenna ports.

In some embodiments, the combination transformation is performed on the codewords according to the division mode of antenna ports to obtain the partially-coherent codeword.

For example, in the case where all antenna ports are divided into two antenna port groups, taking 8 antenna ports and 2 layers as an example, assuming that the division mode of data of 2 layers is 1+1, the combination transformation may be performed on the codewords determined in the first codeword set that is used for the fully-coherent transmission and corresponds to 4 antenna ports and 1 layer to determine the partially-coherent codeword of 8 antenna ports and 2 layers.

For example, if the determined codeword is $\frac{1}{2}\begin{bmatrix} 1 \\ 1 \\ 1 \\ 1 \end{bmatrix}$, the combination is performed on the matrix part $\begin{bmatrix} 1 \\ 1 \\ 1 \\ 1 \end{bmatrix}$ in the codeword to obtain the following matrix:

$$\begin{bmatrix} 1 & 0 \\ 1 & 0 \\ 1 & 0 \\ 1 & 0 \\ 0 & 1 \\ 0 & 1 \\ 0 & 1 \\ 0 & 1 \end{bmatrix}.$$

According to the division mode of the antenna ports, for example, the first antenna port group includes antenna ports 1, 2, 5 and 6 and the second antenna port group also includes antenna ports 3, 4, 7 and 8, the matrix is transformed to obtain:

$$\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix}.$$

Then, the obtained matrix is subjected to energy normalization, for example, by using a coefficient, for example, the coefficient may be $\frac{1}{\sqrt{N0}}$, where N0 represents the number of non-zero elements in the matrix, or other coefficients may be used, which is not limited here. Finally, the partially-coherent codeword of 8 antenna ports and 2 layers is obtained as follows:

$$\frac{1}{\sqrt{8}}\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix} = \frac{1}{2\sqrt{2}}\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix}.$$

Optionally, in some other embodiments, determining the plurality of codewords included in the pre-configuration information includes:

determining the determined one or more codewords as the plurality of codewords included in the pre-configuration information.

In one example, for example, one or more codewords determined from the first codeword set that is used for the fully-coherent transmission and corresponds to 4 antenna ports and 1 layer are $W^1_1$, $W^1_3$, $W^1_4$, $W^1_6$, $W^1_9$, $W^1_{11}$, $W^1_{12}$, $W^1_{14}$; one or more codewords determined from the first codeword set that is used for the fully-coherent transmission and corresponds to 4 antenna ports and 2 layers are $W^2_1$, $W^2_4$, $W^2_5$, $W^2_8$; one or more codewords determined from the first codeword set that is used for the fully-coherent transmission and corresponds to 4 antenna ports and 3 layers are $W^3_1$, $W^3_3$; one or more codewords determined from the first codeword set that is used for the fully-coherent transmission and corresponds to 4 antenna ports and 4 layers include $W^4_1$. The above codewords may be directly determined as multiple codewords included in the pre-configuration information, so the number of codewords included in the pre-configuration information is: (8+4+2+1)+1=16, in which the extra one is an empty matrix.

As an example, the pre-configuration information may be a Transmit Precoding Matrix Indicator (TPMI) table.

Referring to the above example, the TPMI table may be shown in Table 3 below:

Table 4

| 0-3 | $w^1_1$ | $W^1_3$ | $W^1_4$ | $W^1_6$ |
|---|---|---|---|---|
| 4-7 | $W^1_9$ | $W^1_{11}$ | $w^1_{12}$ | $w^1_{14}$ |
| 8-11 | $W^2_1$ | $W^2_4$ | $W^2_3$ | $W^2_8$ |
| 12-15 | $W^3_1$ | $W^3_3$ | $W^4_1$ | empty matrix |

In an embodiment, the precoding matrix indication information includes two codeword fields, and each codeword field is used to indicate one codeword in the pre-configuration information.

When the pre-configuration information includes the determined one or more codewords, the precoding matrix indication information may include two codeword fields to respectively indicate two codewords in the pre-configuration information. For example, referring to the above example, the pre-configuration information includes 16 codewords, and the two codeword fields may respectively indicate two of the 16 codewords, such as $W^1_9$ and $W^3_3$, and by performing combination transformation on $W^1_9$ and $W^3_3$, a partially-coherent codeword for 8 antenna ports and 4 layers may be obtained.

In some embodiments, the combination transformation may be performed on the codewords according to the division mode of antenna ports to obtain the corresponding partially-coherent codeword.

Second Manner:

The plurality of codewords included in the pre-configuration information may be determined based on the division mode of the data of the L layers among antennal port groups, and according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission.

In some embodiments, the pre-configuration information is determined according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission through the following steps:

determining one or more first codeword sets corresponding to one or more layers from N/2 antenna ports and 1 layer to N/2 antenna ports and N/2 layers according to the division mode; and determining the plurality of codewords included in the pre-configuration information according to the one or more first codeword sets.

Specifically, the one or more first codeword sets corresponding to one or more layers from N/2 antenna ports and 1 layer to N/2 antenna ports and N/2 layers may be determined in the following manner according to the division mode.

In some embodiments, all antenna ports are grouped into a first antenna port group and a second antenna port group, and all antenna ports within the same antenna port group are used for the fully-coherent transmission and antenna ports from different antenna port groups are used for non-coherent transmission, and the division mode includes grouping the data of the L layers into either or both of a first group and a second group according to a preset rule, in which the first group includes the first antenna port group, and the second group includes the second antenna port group.

The antenna ports may be divided into two antenna port groups, and the antennas in the same antenna port group are used for fully-coherent transmission, while the antennas from different antenna port groups are used for non-coherent transmission. Specifically, taking N=8 as an example, the antenna ports can be divided into two antenna port groups, each group includes 4 antenna ports. L may be any positive integer value between 1 and 8. For example, when L=4, all data of the 4 layers of may be grouped into the first antenna port group or the second antenna port group, or data of 2 layers in the data of the 4 layers may be grouped into the first antenna port group, and data of the remaining 2 layers may be grouped into the second antenna port group.

In some embodiments, all antenna ports are divided into four groups including: a first antenna port group, a second antenna port group, a third antenna port group and a fourth antenna port group, and all antenna ports in the same antenna port group are used for the fully-coherent transmission and antenna ports from different antenna port groups are used for non-coherent transmission, and the division mode includes grouping the data of the L layers into any one or both of a first group and a second group according to a preset rule, in which the first group includes the first antenna port group and the second antenna port group, and the second group includes the third antenna port group and the fourth antenna port group.

The antenna ports may be divided into four antenna port groups, such as a first antenna port group, a second antenna port group, a third antenna port group and a fourth antenna port group. The antenna ports in the same antenna port group are used for the fully-coherent transmission, while the antenna ports from different antenna port groups are used for the non-coherent transmission. Specifically, taking N=8 as an example, the antenna ports may be divided into four antenna port groups, each of which includes 2 antenna ports. The first antenna port group and the second antenna port group may be regarded as the first group, and the third antenna port group and the fourth antenna port group may be regarded as the second group. L may be any positive integer value between 1 and 8. For example, when L=4, data of all 4 layers may be grouped into the first group (i.e., the first antenna port group and the second antenna port group) or the second group (i.e., the third antenna port group and the fourth antenna port group), or data of 2 layers in the data of the 4 layers may be grouped into the first group (i.e., the first antenna port group and the second antenna port group), and data of the remaining 2 layers may be grouped into the second group (i.e., the third antenna port group and the fourth antenna port group).

In some embodiments, data of $L_M$ layers in the data of the L layers is grouped into a first group and data of $L_N$ layers in the data of the L layers is grouped into a second group; when all antenna ports are divided into two antenna port groups, the first group may include a first antenna port group, and the second group may include a second antenna port group; when all antenna ports are divided into four antenna port groups, the first group may include a first antenna port group and a second antenna port group, and the second group may include a third antenna port group and a fourth antenna port group.

Determining of the one or more first codeword sets corresponding to one or more layers from N/2 antenna ports and 1 layer to N/2 antenna port and N/2 layers includes:

determining a first codeword set corresponding to N/2 antenna porta and $L_M$ layers and determining a first codeword set corresponding to N/2 antenna porta and $L_N$ layers;
in which $L_M$ and $L_N$ are all possible positive integers that satisfy the following condition:

$$L_M + L_N = L.$$

Specifically, when the data of $L_M$ layers in the data of the L layers is grouped into the first group and the data of $L_N$ layers is grouped into the second group, it can be determined that the first codeword set includes: the first codeword set corresponding to the N/2 antenna ports and $L_M$ layers, and the first codeword set corresponding to the N/2 antenna ports and $L_N$ layers. When all antenna ports are divided into two antenna port groups, the aforementioned "the first codeword set corresponding to the N/2 antenna ports and $L_M$ layers" represents the first codeword set that is used for the fully-coherent transmission and corresponds to the N/2 antenna ports and $L_M$ layers, and similarly, the aforementioned "the first codeword set corresponding to the N/2 antenna ports and $L_N$ layers" represents the first codeword set that is used for the fully-coherent transmission and corresponds to the N/2 antenna ports and $L_N$ layers. When all antenna ports are divided into four antenna port groups, the aforementioned "the first codeword set corresponding to the N/2 antenna ports and $L_M$ layers" represents the first codeword set that is used for the partially-coherent transmission and corresponds to the N/2 antenna ports and $L_M$ layers, and similarly, the aforementioned "the first codeword set corresponding to the N/2 antenna ports and $L_N$ layers" represents the first codeword set that is used for the partially-coherent transmission and corresponds to the N/2 antenna ports and $L_N$ layers.

For example, when N=8 and L=5, the following possible division modes may exist: 4+1 (i.e., data of 4 layers is grouped into the first group, and data of 1 layer is grouped into the second group), 1+4 (i.e., data of 1 layer is grouped into the first group, and data of 4 layers is grouped into the second group), 3+2 (i.e., data of 3 layers is grouped into the first group, and data of 2 layers is divided into the second group), 2+3 (i.e., data of 2 layers is grouped into the first group, and data of 3 layers is grouped into the second group). In this case, it can be determined that the first codeword set includes: the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers.

Specifically, $L_M$ and $L_N$ may also satisfy additional conditions to reduce the number of the determined first codeword sets.

In some embodiments, when L is less than or equal to N/2, $L_M$ and $L_N$ also satisfy any of the following conditions:

an absolute value of $L_M-L_N$ is less than or equal to 1; or
either $L_M$ or $L_N$ is equal to 0 and the other is equal to L.

For example, when N=8 and L=4, the absolute value of $L_M-L_N$ may be less than or equal to 1, and the following possible division modes may exist: 2+2 (that is, data of 2 layers is grouped into the first group, and data of 2 layers is grouped into the second group). In this case, it can be determined that the first codeword set includes the first codeword set corresponding to 4 antenna ports and 2 layers.

For another example, when N=8 and L=3, the absolute value of $L_M-L_N$ may be less than or equal to 1, and the following possible division modes may exist: 2+1 (i.e., data of 2 layers is grouped into the first group, and data of 1 layer is grouped into the second group), 1+2 (i.e., data of 1 layer is grouped into the first group, and data of 2 layers is grouped into the second group). In this case, it can be determined that the first codeword set includes: the first codeword set corresponding to 4 antenna ports and 1 layer, the first codeword set corresponding to 4 antenna ports and 2 layers.

For example, when N=8 and L=4, either $L_M$ or $L_N$ may be equal to 0 and the other is equal to L, then the following possible division modes may exist: 0+4 (i.e., data of 0 layer is grouped into the first group, and data of 4 layers is grouped into the second group), 4+0 (i.e., data of 4 layers is grouped into the first group, and data of 0 layer is grouped into the second group). In this case, it can be determined that the first codeword set includes the first codeword set corresponding to 4 antenna ports and 4 layers.

For another example, when N=8 and L=3, the absolute value of $L_M-L_N$ may be less than or equal to 1, or either of $L_M$ or $L_N$ may be equal to 0 and the other may be equal to L, then the following possible division modes may exist: 0+3 (i.e., data of 0 layer is grouped the first group, and data of 3 layers is grouped into the second group), 3+0 (i.e., data of 3 layers is grouped into the first group, and data of 0 layer is grouped divided into the second group), 2+1 (i.e., data of 2 layers is grouped into the first group, and data of 1 layer is grouped into the second group), 1+2 (i.e., data of 1 layer is grouped into the first group, and data of 2 layers is grouped into the second group). In this case, it can be determined that the first codeword set includes the first codeword set corresponding to 4 antenna ports and 1 layer, the first codeword set corresponding to 4 antenna ports and 2 layers, and the first codeword set corresponding to 4 antenna ports and 3 layers.

In some embodiments, when L is greater than N/2, $L_M$ and $L_N$ also satisfy any of the following conditions:

$L_M$ and $L_N$ are positive integers less than or equal to N/2, and the absolute value of $L_M-L_N$ is less than or equal to 1;
$L_M$ and $L_N$ are positive integers less than or equal to N/2, $L_M$ is less than $L_N$, and the absolute value of $L_M-L_N$ is less than or equal to 1; or
$L_M$ and $L_N$ are positive integers less than or equal to N/2.

For example, when N=8 and L=5, $L_M$ and $L_N$ may be positive integers less than or equal to N/2, and the absolute value of $L_M-L_N$ may be less than or equal to 1, then there may be the following possible division modes: 2+3 (i.e., data of 2 layers is grouped into the first group, and data of 3 layers is grouped into the second group), 3+2 (i.e., data of 3 layers is grouped into the first group, and data of 2 layers is grouped into the second group). In this case, it can be determined that the first codeword set includes the first codeword set corresponds to 4 antenna ports and 2 layers, and the first codeword set corresponding to 4 antenna ports and 3 layers.

For another example, when N=8 and L=5, $L_M$ and $L_N$ may be positive integers less than or equal to N/2, then there may be the following possible division modes: 4+1 (i.e., data of 4 layers is grouped into the first group, and data of 1 layer is grouped into the second group), 1+4 (i.e., data of 1 layer is grouped into the first group, and data of 4 layers is grouped into the second group), 3+2 (i.e., data of 3 layers is grouped into the first group, and data of 2 layers is grouped into the second group), 2+3 (i.e., data of 2 layers is grouped into the first group, and data of 3 layers is grouped into the second group). In this case, it can be determined that the first codeword set includes the first codeword set corresponds to 4 antenna ports and 1 layer, the first codeword set corresponding to 4 antenna ports and 2 layers, the first codeword set corresponds to 4 antenna ports and 3 layers, and the first codeword set corresponding to 4 antenna ports and 4 layers.

For another example, when N=8 and L=5, $L_M$ and $L_N$ may be positive integers less than or equal to N/2, $L_M$ is less than or equal to $L_N$, and the absolute value of $L_M$-$L_N$ may be less than or equal to 1, then there may be the following possible division modes: 2+3 (i.e., data of 2 layers is grouped into the first group, and data of 3 layers is grouped into the second group). In this case, it can be determined that the first codeword set includes the first codeword set corresponds to 4 antenna ports and 2 layers, and the first codeword set corresponding to 4 antenna ports and 3 layers.

After determining the one or more first codeword sets corresponding to one or more layers from N/2 antenna ports and 1 layer to N/2 antenna ports and N/2 layers, the plurality of codewords included in the pre-configuration information may be determined according to the one or more first codeword sets corresponding to the one or more layers for the N/2 antenna ports.

Optionally, in some embodiments, determining the plurality of codewords included in the pre-configuration information includes:

determining the plurality of codewords included in the pre-configuration information by performing a combination transformation on codewords in the determined first codeword set.

In an example, assuming that N=8, for L=1, if the division mode is determined to be 0+1; for L=2, if the division mode is determined to be 1+1; for L=3, if the division mode is determined to be 1+2; for L=4, if the division mode is determined to be 2+2; for L=5, if the division mode is determined to be 2+3; for L=6, if the division mode is determined to be 3+3; for L=7, if the division mode is determined to be 3+4; for L=8, if the division mode is determined to be 4+4; the first codeword sets include the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. Then, the plurality of codewords included in the pre-configuration information may be determined by performing combination transformation on the codewords in the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. For the case where all antenna ports are divided into two antenna port groups, since the fully-coherent transmission codewords of 4 antenna ports and 1 layer include 16 codewords, the fully-coherent transmission codewords of 4 antenna ports and 2 layers include 8 codewords, the fully-coherent transmission codewords of 4 antenna ports and 3 layers include 4 codewords, and the fully-coherent transmission codewords of 4 antenna ports and 4 layers include 2 codewords, then according to the above division modes and by performing codeword combination transformation, the number of codewords of 8 antenna ports and 1 layer is obtained to be: 16; the number of partially-coherent codewords of 8 antenna ports and 2 layers is obtained to be: 16*16; the number of partially-coherent codewords of 8 antenna ports and 3 layers is obtained to be: 16*8; the number of partially-coherent codewords of 8 antenna ports and 4 layers is obtained to be: 8*8; the number of partially-coherent codewords of 8 antenna ports and 5 layers is obtained to be: 8*4; the number of partially-coherent codewords of 8 antenna ports and 6 layers is obtained to be: 4*4; the number of partially-coherent codewords of 8 antenna ports and 7 layers is obtained to be: 4*2; the number of partially-coherent codewords of 8 antenna ports and 8 layers is obtained to be: 2*2; the total number of codewords is: 524, and thus the number of partially-coherent codewords for the two antenna port groups included in the pre-configuration information is 524.

If the codeword set is not determined based on the division mode of the data of the L layers among the antenna port groups, assuming that N=8, for L=1, all possible division modes include 0+1, 1+0; for L=2, all possible division modes include 2+0, 0+2, 1+1; for L=3, all possible division modes include 3+0, 0+3, 1+2, 2+1; for L=4, all possible division modes include 4+0, 0+4, 3+1, 1+3, 2+2; for L=5, all possible division modes include 4+1, 1+4, 3+2, 2+3; for L=6, all possible division modes include 4+2, 2+4, 3+3; for L=7, all possible division modes include 4+3, 3+4; for L=8, all possible division modes include 4+4; the first codeword sets include the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. For the case where all antenna ports are divided into two groups, since the fully-coherent transmission codewords of 4 antenna ports and 1 layer include 16 codewords, the fully-coherent transmission codewords of 4 antenna ports and 2 layers include 8 codewords, the fully-coherent transmission codewords of 4 antenna ports and 3 layers include 4 codewords, and the fully-coherent transmission codewords of 4 antenna ports and 4 layers include 2 codewords, then according to the above division modes and by performing codeword combination transformation, the number of codewords of 8 antenna ports and 1 layer is obtained to be: 16+16; the number of partially-coherent codewords of 8 antenna ports and 2 layers is obtained to be: 8+8+6*16; the number of partially-coherent codewords of 8 antenna ports and 3 layers is obtained to be: 4+4+16*8+16*8; the number of partially-coherent codewords of 8 antenna ports and 4 layers is obtained to be: 2+2+4*16+ 16*4+8*8; the number of partially-coherent codewords of 8 antenna ports and 5 layers is obtained to be: 2*16+16*2+8*4+4*8; the number of partially-coherent codewords of 8 antenna ports and 6 layers is obtained to be: 2*8+8*2+4*4; the number of partially-coherent codewords of 8 antenna ports and 7 layers is obtained to be: 2*4+4*2; the number of partially-coherent codewords of 8 antenna ports and 8 layers is obtained to be: 2*2; the total number of partially-coherent codewords for two antenna port groups will be 960.

According to the embodiments of the present disclosure, the codeword set is determined based on the division mode of the data of the L layers among antenna port groups, which reduces the amount of codewords, thereby reducing signaling overhead.

In an embodiment, the precoding matrix indication information includes 1 codeword field, and the codeword field is used to indicate one codeword in the pre-configuration information.

When the codewords included in the pre-configuration information are obtained by performing the combination transformation on the determined one or more codewords, the precoding matrix indication information may include 1 codeword field to indicate one codeword in the pre-configuration information. For example, referring to the above example, the pre-configuration information includes 524 codewords, then the 1 codeword field may indicate one of the 524 codewords as a partially-coherent codeword.

In some embodiments, the combination transformation is performed on the codewords according to the division mode of antenna ports to obtain the partially-coherent codeword.

Optionally, in some other embodiments, determining the plurality of codewords included in the pre-configuration information includes:

determining the codewords in the determined one or more first codeword sets as the plurality of codewords included in the pre-configuration information.

In one example, for example, assuming that N=8, for L=1, if the division mode is determined to be 0+1; for L=2, if the division mode is determined to be 1+1; for L=3, if the division mode is determined to be 1+2; for L=4, if the division mode is determined to be 2+2; for L=5, if the division mode is determined to be 2+3; for L=6, if the division mode is determined to be 3+3; for L=7, if the division mode is determined to be 3+4; for L=8, if the division mode is determined to be 4+4; the first codeword sets include the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. The codewords in the above codeword sets may be directly determined as the plurality of codewords included in the pre-configuration information. For the case where all antenna ports are divided into two antenna port groups, since the fully-coherent transmission codewords of 4 antenna ports and 1 layer include 16 codewords, the fully-coherent transmission codewords of 4 antenna ports and 2 layers include 8 codewords, the fully-coherent transmission codewords of 4 antenna ports and 3 layers include 4 codewords, and the fully-coherent transmission codewords of 4 antenna ports and 4 layers include 2 codewords, the number of codewords included in the pre-configuration information is: (16+8+4+2)+1=31, in which the extra one is an empty matrix.

As an example, the pre-configuration information may be a Transmit Precoding Matrix Indicator (TPMI) table.

In an embodiment, the precoding matrix indication information includes two codeword fields, and each codeword field is used to indicate one codeword in the pre-configuration information.

When the pre-configuration information includes the determined one or more codewords, the precoding matrix indication information may include two codeword fields to respectively indicate two codewords in the pre-configuration information. For example, referring to the above example, the pre-configuration information includes 31 codewords, and the two codeword fields may respectively indicate two of the 31 codewords, and by performing combination transformation on the two codewords, a partially-coherent codeword may be obtained.

In some embodiments, the combination transformation may be performed on the codewords according to the division mode of antenna ports to obtain the corresponding partially-coherent codeword.

Third Manner:

The plurality of codewords included in the pre-configuration information may be determined based on the division mode of the data of the L layers among antenna port groups and the Euclidean distance between codewords or based on the division mode of the data of the L layers among antenna port groups and the cosine similarity between codewords, and according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission, where L is a positive integer less than or equal to N.

In some embodiments, the pre-configuration information is determined according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission through the following steps:

determining one or more codewords from the first codeword set corresponding to each layer for the N/2 antenna ports according to the Euclidean distance between codewords or the cosine similarity between codewords; determining one or more first codeword sets corresponding to one or more layers from N/2 antenna ports and 1 layer to N/2 antenna ports and N/2 layers according to the division mode; and determining the plurality of codewords included in the pre-configuration information according to one or more codewords determined from the one or more first codeword sets.

Regarding a specific implementation of determining the one or more codewords from the first codeword set corresponding to each layer for the N/2 antenna ports according to the Euclidean distance between codewords or the cosine similarity between codewords, reference may be made to descriptions of the First Manner, which is not elaborated here.

Regarding a specific implementation of determining the one or more first codeword sets corresponding to one or more layers from N/2 antenna ports and 1 layer to N/2 antenna ports and N/2 layers according to the division mode, reference may be made to descriptions of the Second Manner, which is not elaborated here.

Optionally, in some embodiments, determining the plurality of codewords included in the pre-configuration information includes:

determining the plurality of codewords included in the pre-configuration information by performing a combination transformation on the one or more codewords determined from the one or more first codeword sets.

In an example, assuming that N=8, for L=1, if the division mode is determined to be 0+1; for L=2, if the division mode is determined to be 1+1; for L=3, if the division mode is determined to be 1+2; for L=4, if the division mode is determined to be 2+2; for L=5, if the division mode is determined to be 2+3; for L=6, if the division mode is determined to be 3+3; for L=7, if the division mode is determined to be 3+4; for L=8, if the division mode is determined to be 4+4; the first codeword sets include the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. For the case where all antenna ports are divided into two groups, eight codewords determined from the first codeword set that is used for the fully-coherent transmission and corresponds to 4 antenna ports and 1 layer include $W^1_1$, $W^1_3$, $W^1_4$, $W^1_6$, $W^1_9$, $W^1_{11}$, $W^1_{12}$, $W^1_{14}$ ; four codewords determined from the first codeword set that is used for the fully-coherent transmission and corresponds to 4 antenna ports and 2 layers include $W^2_1$, $W^2_4$, $W^2_3$, $W^2_8$; two codewords determined from the first codeword set that is used for the fully-coherent transmission and corresponds to 4 antenna ports and 3 layers include $W^3_1$, $W^3_4$ ; one codeword determined from the first codeword set that is used for the fully-coherent transmission and corresponds to 4 antenna ports and 4 layers includes $W^4_1$. The partially-coherent codeword included in the pre-configuration information may be determined by performing combination transformation on the above codewords. According to the above division modes and by performing codeword combination transformation, the number of codewords of 8 antenna ports and 1 layer is obtained to be: 8; the number of partially-coherent codewords of 8 antenna ports and 2 layers is obtained to be: 8*8; the number of partially-coherent codewords of 8 antenna ports and 3 layers is obtained to be: 8*4; the number of partially-coherent codewords of 8 antenna ports and 4 layers is obtained to be: 4*4; the number of partially-coherent codewords of 8 antenna ports and 5 layers is obtained to be: 4*2; the number of partially-coherent codewords of 8 antenna ports and 6 layers is obtained to be: 2*2; the number of partially-coherent codewords of 8 antenna ports and 7 layers is obtained to be: 2*1; the number of partially-coherent codewords of 8 antenna ports and 8 layers is obtained to be: 1*1; the total number of the obtained codewords is 135, thus the number of partially-coherent codewords for two antenna port groups included in the pre-configuration information will be 135.

n an embodiment, the precoding matrix indication information includes 1 codeword field, and the codeword field is used to indicate one codeword in the pre-configuration information.

When the codewords included in the pre-configuration information are obtained by performing the combination transformation on the determined one or more codewords, the precoding matrix indication information may include 1 codeword field to indicate one codeword in the pre-configuration information. For example, referring to the above example, the pre-configuration information includes 135 codewords, then the 1 codeword field may indicate one of the 135 codewords as a partially-coherent codeword.

In some embodiments, the combination transformation is performed on the codewords according to the division mode of antenna ports to obtain the partially-coherent codeword.

Optionally, in some other embodiments, determining the plurality of codewords included in the pre-configuration information includes:

determining the one or more codewords in the determined one or more first codeword sets as the plurality of codewords included in the pre-configuration information.

In one example, for example, assuming that N=8, for L=1, if the division mode is determined to be 0+1; for L=2, if the division mode is determined to be 1 + 1; for L=3, if the division mode is determined to be 1+2; for L=4, if the division mode is determined to be 2+2; for L=5, if the division mode is determined to be 2+3; for L=6, if the division mode is determined to be 3+3; for L=7, if the division mode is determined to be 3+4; for L=8, if the division mode is determined to be 4+4; the first codeword sets include the first codeword set corresponding to 4 antenna ports and 1 layer, the first codeword set corresponding to 4 antenna ports and 2 layers, the first codeword set corresponding to 4 antenna ports and 3 layers, and the first codeword set corresponding to 4 antenna ports and 4 layers. For the case where all antenna ports are divided into two groups, eight codewords determined from the first codeword set that is used for the fully-coherent transmission and corresponds to 4 antenna ports and 1 layer include $W^1_1$, $W^1_3$, $W^1_4$, $W^1_6$, $W^1_9$, $W^1_{11}$, $W^1_{12}$, $W^1_{14}$ ; four codewords determined from the first codeword set that is used for the fully-coherent transmission and corresponds to 4 antenna ports and 2 layers include $W^2_1$, $W^2_4$, $W^2_5$, $W^2_8$; two codewords determined from the first codeword set that is used for the fully-coherent transmission and corresponds to 4 antenna ports and 3 layers include $W^3_1$, $W^3_4$ ; one codeword determined from the first codeword set that is used for the fully-coherent transmission and corresponds to 4 antenna ports and 4 layers includes $W^4_1$. The above codewords are directly determined as the plurality of codewords included in the pre-configuration information, and the number of codewords included in the pre-configuration information is: (8+4+2+1)+1=16, in which the extra one is an empty matrix.

In an embodiment, the precoding matrix indication information includes two codeword fields, and each codeword field is used to indicate one codeword in the pre-configuration information.

When the pre-configuration information includes the determined one or more codewords, the precoding matrix indication information may include two codeword fields to respectively indicate two codewords in the pre-configuration information. For example, referring to the above example, the pre-configuration information includes 16 codewords, and the two codeword fields may respectively indicate two of the 16 codewords, such as $W^2_1$ and $W^3_1$, and by performing combination transformation on the two codewords $W^2_1$ and $W^3_1$, a partially-coherent codeword of 8 antenna ports and 5 layers may be obtained.

In some embodiments, the combination transformation may be performed on the codewords according to the division mode of antenna ports to obtain the corresponding partially-coherent codeword.

In some embodiments, the plurality of codewords included in the pre-configuration information are determined according to the first codeword set that is used for the fully-coherent transmission or partially-coherent transmission and corresponds to each layer from the N/2 antenna ports and 1 layer to N/2 antenna ports and N/2 layers corresponding to the MIMO uplink transmission through the following steps:

determining codewords in the first codeword set corresponding to each layer for the N/2 antenna ports as the plurality of codewords included in the pre-configuration information.

Specifically, taking N being 8 as an example, the codewords in the first codeword set that is used for fully-coherent transmission and corresponds to 4 antenna ports and 1 layer, the first codeword set that is used for fully-coherent transmission and corresponds to 4 antenna ports and 2 layers, the first codeword set that is used for fully-coherent transmission and corresponds to 4 antenna ports and 3 layers, and the first codeword set that is used for fully-coherent transmission and corresponds to 4 antenna ports and 4 layers may be determined as the plurality of codewords included in the pre-configuration information. For the case where all antenna ports are divided into two groups, since the fully-coherent transmission codewords of 4 antenna ports and 1 layer include 16 codewords, the fully-coherent transmission codewords of 4 antenna ports and 2 layers include 8 codewords, the fully-coherent transmission codewords of 4 antenna ports and 3 layers include 4 codewords, the fully-coherent transmission codewords of 4 antenna ports and 4 layers include 2 codewords, the number of codewords included in the pre-configuration information is: (16+8+4+2)+1=31, in which the extra one is an empty matrix.

As an example, the pre-configuration information may be a Transmit Precoding Matrix Indicator (TPMI) table.

In an embodiment, the precoding matrix indication information includes two codeword fields, and each codeword field is used to indicate one codeword in the pre-configuration information.

When the pre-configuration information includes the determined one or more codewords, the precoding matrix indication information may include two codeword fields to respectively indicate two codewords in the pre-configuration information. For example, referring to the above example, the pre-configuration information includes 31 codewords, and the two codeword fields may respectively indicate two of the 31 codewords, such as $W^1_9$ and $W^3_4$, and by performing combination transformation on $W^1_9$ and $W^3_4$, a partially-coherent codeword for 8 antenna ports and 4 layers may be obtained.

In some embodiments, the combination transformation may be performed on the codewords according to the division mode of antenna ports to obtain the corresponding partially-coherent codeword.

Those skilled in the art should understand that, for the case where all antenna ports are divided into two groups, the first codeword set corresponding to a certain layer for the N/2 antenna ports in the above description may be the first codeword set that is used for the fully-coherent transmission and corresponds to the certain layer in the N/2 layers, and for the case where all antenna ports are divided into four groups, the first codeword set corresponding to a certain layer for the N/2 antenna ports in the above description may be the first codeword set that is used for the partially-coherent transmission and corresponds to the certain layer in the N/2 layers.

At step S202, the UE 101 determines a partially-coherent codeword according to the pre-configuration information and the precoding matrix indication information.

Optionally, in some embodiments, the precoding matrix indication information includes one codeword field, and the codeword field is used to indicate one codeword in the pre-configuration information.

Determining the partially-coherent codeword according to the pre-configuration information and the precoding matrix indication information includes:

determining the codeword indicated by the codeword field of the precoding matrix indication information as the partially-coherent codeword.

Specifically, when the precoding matrix indication information includes one codeword field, the partially-coherent codeword may be determined according to one codeword in the pre-configuration information and indicated by the codeword field.

For example, assuming that the pre-configuration information includes 64 codewords, the precoding matrix indication information includes 1 codeword field, and the codeword field indicates the codeword $W_{12}$ in the pre-configuration information, then $W_{12}$ may be used as the partially-coherent codeword.

Optionally, in some embodiments, the precoding matrix indication information includes two codeword fields, and each codeword field is used to indicate one codeword in the pre-configuration information.

Determining the partially-coherent codeword according to the pre-configuration information and the precoding matrix indication information includes:

determining the partially-coherent codeword by performing the combination transformation on the codewords indicated by the two codeword fields of the precoding matrix indication information.

Specifically, when the precoding matrix indication information includes 2 codeword fields, the partially-coherent codeword may be determined by performing the combination transformation on the codewords in the pre-configuration information and indicated by the codeword fields.

For example, assuming that the pre-configuration information includes 31 codewords, the precoding matrix indication information includes 2 codeword fields indicating two codewords such as $W^1_9$ and $W^3_4$ in the 31 codewords, then the partially-coherent codeword for 8 antenna ports and 4 layers may be determined by performing the combination transformation on $W^1_9$ and $W^3_4$.

In some embodiments, the combination transformation may be performed on the codewords according to the division mode of antenna ports to obtain the corresponding partially-coherent codeword.

For example, in the case where all antenna ports are divided into two antenna port groups, taking 8 antenna ports and 2 layers as an example, assuming that the division mode of data of 2 layers is 1+1, the combination transformation may be performed on the codewords determined in the first codeword set that is used for the fully-coherent transmission and corresponds to 4 antenna ports and 1 layer to determine the partially-coherent codeword of 8 antenna ports and 2 layers.

For example, if each codeword filed of the precoding matrix indication information indicates $\frac{1}{2}\begin{bmatrix}1\\1\\1\\1\end{bmatrix}$, the

combination is performed on the matrix part $\begin{bmatrix}1\\1\\1\\1\end{bmatrix}$ in the codeword to obtain the following matrix:

$$\begin{bmatrix}1 & 0\\1 & 0\\1 & 0\\1 & 0\\0 & 1\\0 & 1\\0 & 1\\0 & 1\end{bmatrix}.$$

According to the division mode of the antenna ports, for example, the first antenna port group includes antenna ports 1, 2, 5 and 6 and the second antenna port group also includes antenna ports 3, 4, 7 and 8, the matrix is transformed to obtain:

$$\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix}.$$

Then, the obtained matrix is subjected to energy normalization, for example, by using a coefficient, for example, the coefficient may be $\frac{1}{\sqrt{N0}}$, where N0 represents the number of non-zero elements in the matrix, or other coefficients may be used, which is not limited here. Finally, the partially-coherent codeword of 8 antenna ports and 2 layers is obtained as follows:

$$\frac{1}{\sqrt{8}}\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix} = \frac{1}{2\sqrt{2}}\begin{bmatrix} 1 & 0 \\ 1 & 0 \\ 0 & 1 \\ 0 & 1 \\ 1 & 0 \\ 1 & 0 \\ 0 & 1 \\ 0 & 1 \end{bmatrix}.$$

In the above embodiment, the network device sends the precoding matrix indication information to the UE with N antenna ports and performing MIMO uplink transmission according to pre-configuration information, in which the pre-configuration information includes a plurality of codewords determined according to the first codeword set that is used for fully-coherent transmission or partially-coherent transmission and corresponds to each layer from N/2 antenna ports and 1 layer to N/2 antenna ports and N/2 layers corresponding to the MIMO uplink transmission. Thus, a precoding technology that can meet the transmission requirements of the enhanced antenna ports is provided.

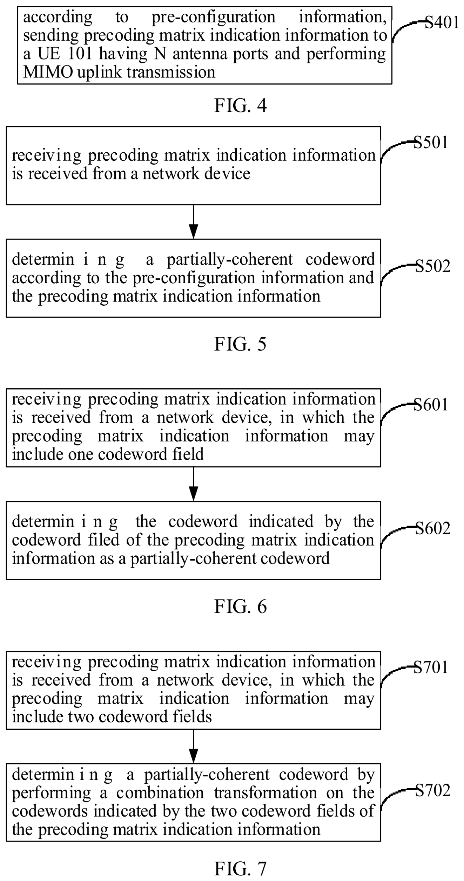

FIG. 4 is a flowchart of a precoding matrix indication method according to an embodiment of the present disclosure. As shown in FIG. 4, the precoding matrix indication method involved in the embodiment of the present disclosure is used in a network device 102, and the method includes the following steps.

**At** step S401, according to pre-configuration information, precoding matrix indication information is sent to a UE 101 having N antenna ports and performing MIMO uplink transmission, where N is a positive even number.

In some embodiments, the UE 101 may receive pre-configured matrix indication information sent by network device 102.

In some embodiments, the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Regarding a specific implementation of step S401, particularly the determination mode of the pre-configuration information, reference may be made to step S201 of FIG. 2, which is not elaborated here.

In the above embodiment, the network device sends the precoding matrix indication information to the UE with N antenna ports and performing MIMO uplink transmission according to pre-configuration information, in which the pre-configuration information includes a plurality of codewords determined according to the first codeword set that is used for fully-coherent transmission or partially-coherent transmission and corresponds to each layer from N/2 antenna ports and 1 layer to N/2 antenna ports and N/2 layers corresponding to the MIMO uplink transmission. Thus, a precoding technology that can meet the transmission requirements of the enhanced antenna ports is provided.

FIG. 5 is a flowchart of a precoding matrix indication method according to an embodiment of the present disclosure. As shown in FIG. 5, the precoding matrix indication method involved in the embodiment of the present disclosure is used in a UE 101 having N antenna ports and performing MIMO uplink transmission, where N is a positive even number, and the method includes the following steps.

At step S501, precoding matrix indication information is received from a network device.

In some embodiments, the precoding matrix indication information includes one codeword field, and the codeword field is used to indicate one codeword in the pre-configuration information.

In some embodiments, the precoding matrix indication information includes two codeword fields, and each codeword field is used to indicate one codeword in the pre-configuration information.

At step S502, a partially-coherent codeword is determined according to the pre-configuration information and the precoding matrix indication information.

The pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Regarding the determination mode of the pre-configuration information, reference may be made to step S201 of FIG. 2, which is not elaborated here.

In the above embodiment, the UE receives the precoding matrix indication information and determines the partially-coherent codeword according to pre-configuration information and the precoding matrix indication information, in which the pre-configuration information includes a plurality of codewords determined according to the first codeword set that is used for fully-coherent transmission or partially-coherent transmission and corresponds to each layer from N/2 antenna ports and 1 layer to N/2 antenna ports and N/2 layers corresponding to the MIMO uplink transmission. Thus, a precoding technology that can meet the transmission requirements of the enhanced antenna ports is provided.

FIG. 6 is a flowchart of a precoding matrix indication method according to an embodiment of the present disclosure. As shown in FIG. 6, the precoding matrix indication method involved in the embodiment of the present disclosure is used in a UE 101 having N antenna ports and performing MIMO uplink transmission, where N is a positive even number, and the method includes the following steps.

At step S601, precoding matrix indication information is received from a network device, in which the precoding matrix indication information may include one codeword field, and the codeword field is used to indicate one codeword in the pre-configuration information.

The pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Regarding the determination mode of the pre-configuration information, reference may be made to step S201 of FIG. 2, which is not elaborated here.

At step S602, the codeword indicated by the codeword filed of the precoding matrix indication information is determined as a partially-coherent codeword.

Regarding a specific implementation of step S602, reference may be made to step S202 of FIG. 2, which is not elaborated here.

In the above embodiment, the UE receives the precoding matrix indication information and determines the partially-coherent codeword according to pre-configuration information and the precoding matrix indication information, in which the pre-configuration information includes a plurality of codewords determined according to the first codeword set that is used for fully-coherent transmission or partially-coherent transmission and corresponds to each layer from N/2 antenna ports and 1 layer to N/2 antenna ports and N/2 layers corresponding to the MIMO uplink transmission. Thus, a precoding technology that can meet the transmission requirements of the enhanced antenna ports is provided.

FIG. 7 is a flowchart of a precoding matrix indication method according to an embodiment of the present disclosure. As shown in FIG. 7, the precoding matrix indication method involved in the embodiment of the present disclosure is used in a UE 101 having N antenna ports and performing MIMO uplink transmission, where N is a positive even number, and the method includes the following steps.

At step S701, precoding matrix indication information is received from a network device, in which the precoding matrix indication information may include two codeword fields, and each codeword field is used to indicate one codeword in the pre-configuration information.

The pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Regarding the determination mode of the pre-configuration information, reference may be made to step S201 of FIG. 2, which is not elaborated here.

At step S702, a partially-coherent codeword is determined by performing a combination transformation on the codewords indicated by the two codeword fields of the precoding matrix indication information.

Regarding a specific implementation of step S702, reference may be made to step S202 of FIG. 2, which is not elaborated here.

In the above embodiment, the UE receives the precoding matrix indication information and determines the partially-coherent codeword according to pre-configuration information and the precoding matrix indication information, in which the pre-configuration information includes a plurality of codewords determined according to the first codeword set that is used for fully-coherent transmission or partially-coherent transmission and corresponds to each layer from N/2 antenna ports and 1 layer to N/2 antenna ports and N/2 layers corresponding to the MIMO uplink transmission. Thus, a precoding technology that can meet the transmission requirements of the enhanced antenna ports is provided.

The embodiments of the present disclosure also propose an apparatus for implementing any of the above methods, for example, an apparatus is proposed, the above apparatus includes units or modules for implementing various steps performed by the terminal in any of the above methods. For another example, an apparatus is proposed, including units or modules for implementing various steps performed by a network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus can be implemented in the form of hardware circuits, and the functions of some or all of the units or modules can be realized by designing the hardware circuits. The above hardware circuits can be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit can be realized by a programmable logic device (PLD), taking a field programmable gate array (FPGA) as an example, which can include a large number of logic gate circuits, and the connection relationship between the logic gate circuits is configured by a configuration file, so as to realize the functions of some or all of the above units or modules. All units or modules of the above apparatuses can be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

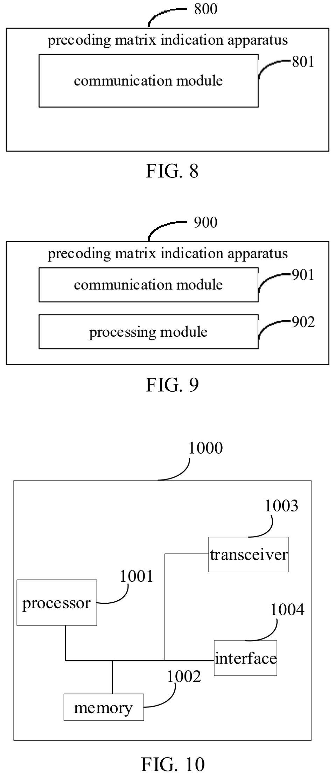

FIG. 8 is a schematic diagram of a precoding matrix indication apparatus proposed in an embodiment of the present disclosure. As shown in FIG. 8, the apparatus 800 is applied in a network device and includes: a communication module 801, configured to send, according to pre-configuration information, precoding matrix indication information to a user equipment (UE) having N antenna ports and performing multiple-input multiple-output (MIMO) uplink transmission, where N is a positive even number; in which the pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Optionally, the communication module 801 is used to execute steps related to "sending precoding matrix indication information" executed by the network device 102 in any of the above methods, which will not be described in detail here.

FIG. 9 is a schematic diagram of a precoding matrix indication apparatus proposed in an embodiment of the present disclosure. As shown in FIG. 9, the apparatus 900 is applied in a UE having N antenna ports and performing MIMO uplink transmission, where N is a positive even number, and the apparatus 900 includes: a communication module 901 and a processing module 902. The communication module 901 is configured to receive precoding matrix indication information from a network device. The processing module 902 is configured to determine a partially-coherent codeword according to pre-configuration information and the precoding matrix indication information. The pre-configuration information includes a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

Optionally, the communication module 901 is used to execute steps related to "receiving precoding matrix indication information" executed by the UE 101 in any of the above methods, which will not be described in detail here. The processing module 902 is used to execute steps related to "determining a partially-coherent codeword" executed by the UE 101 in any of the above methods, which will not be described in detail here.

FIG 10 is a schematic diagram of a communication device 1000 proposed in an embodiment of the present disclosure. The communication device 1000 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 1000 may be used to implement the method described in the above method embodiments, and for details, reference may be made to the description in the above method embodiments.

**As** shown in FIG. 10, the communication device 1000 includes one or more processors 1001. The processor 1001 may be a general-purpose processor or a dedicated processor, for example, a baseband processor or a central processing unit. The baseband processor may be used to process a communication protocol and communication data, and the central processing unit may be used to control the communication device (such as a base station, a baseband chip, a terminal, a terminal chip, a DU or a CU, etc.) to execute a program and process data of the program. The processor 1001 is used to call instructions so that the communication device 1000 executes any of the above methods.

In some embodiments, the communication device 1000 further includes one or more memories 1002 for storing instructions. Optionally, all or part of the memory 1002 may be outside the communication device 1000.

In some embodiments, the communication device 1000 further includes one or more transceivers 1003. When the communication device 1000 includes one or more transceivers 1003, the communication steps such as sending and receiving in the above methods are performed by the transceiver 1003, and the other steps are performed by the processor 1001.

In some embodiments, the transceiver may include a receiver and a transmitter, and the receiver and the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

Optionally, the communication device 1000 further includes one or more interface circuits 1004, which are connected to the memory 1002. The interface circuit 1004 may be used to receive signals from the memory 1002 or other apparatuses, and may be used to send signals to the memory 1002 or other apparatuses. For example, the interface circuit 1004 may read instructions stored in the memory 1002 and send the instructions to the processor 1001.

The communication device 1000 described in the above embodiments may be a network device or a terminal, but the scope of the communication device 1000 described in the present disclosure is not limited thereto, and the structure of the communication device 7100 may not be limited by FIG. 10. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

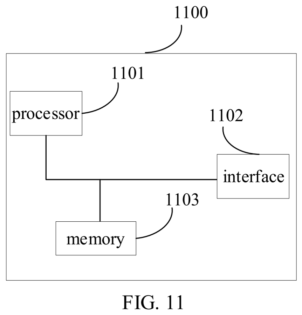

FIG. 11 is a schematic diagram of a chip 1100 proposed in an embodiment of the present disclosure. In case where the communication device 1100 may be a chip or a chip system, reference may be made to the schematic diagram of the chip 1100 shown in FIG. 11, but the present disclosure is not limited thereto.

The chip 1100 includes one or more processors 1101, and the processor 1101 is used to call instructions so that the chip 1100 executes any of the above methods.

In some embodiments, the chip 1100 further includes one or more interface circuits 1102, which are connected to the memory 1103. The interface circuit 1102 may be used to receive signals from the memory 1103 or other apparatuses, and the interface circuit 1102 may be used to send signals to the memory 1103 or other apparatuses. For example, the interface circuit 1102 may read instructions stored in the memory 1103 and send the instructions to the processor 1101. Optionally, the terms such as "interface circuit", "interface", "transceiver pin", and "transceiver" may be exchangeable with each other.

In some embodiments, the chip 1100 further includes one or more memories 1103 for storing instructions. Optionally, all or part of the memory 1103 may be outside the chip 1100.

The present disclosure also proposes a storage medium, on which instructions are stored, and when the instructions are executed on the communication device 1000, the communication device 1000 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it can also be a temporary storage medium.

The present disclosure also proposes a program product, which, when executed by the communication device 1000, enables the communication device 1000 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

In addition, it should be understood that the various embodiments described in the present disclosure may be implemented individually or in combination with other embodiments when the solution permits.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

**Claims**

**1.** A precoding matrix indication method, performed by a network device, comprising:

sending, according to pre-configuration information, precoding matrix indication information to a user equipment (UE) having N antenna ports and performing multiple-input multiple-output (MIMO) uplink transmission, where N is a positive even number;

wherein the pre-configuration information comprises a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

2. The method of claim 1, wherein

a Euclidean distance between any two codewords in K codewords comprised in the pre-configuration information is greater than a preset distance threshold, and/or a sum of Euclidean distances between each two codewords in the K codewords comprised in the pre-configuration information is greater than or equal to a sum of Euclidean distances between each two codewords in any K codewords in the first codeword set;
or
a cosine similarity between any two codewords in K codewords comprised in the pre-configuration information is less than a preset similarity threshold, and/or a sum of cosine similarities between each two codewords in the K codewords comprised in the pre-configuration information is less than or equal to a sum of cosine similarities between each two codewords in any K codewords in the first codeword set.

3. The method of claim 1, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers and based on at least one of:

a codeword feature, wherein the codeword feature comprises a Euclidean distance between codewords or a cosine similarity between codewords; or
a division mode of data of L layers among antenna port groups, where L is a positive integer less than or equal to N.

4. The method of claim 3, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:

determining one or more codewords from the first codeword set corresponding to each layer for the N/2 antenna ports according to the Euclidean distance between codewords or the cosine similarity between codewords; determining the plurality of codewords comprised in the pre-configuration information according to the one or more codewords;
or
determining, according to the division mode, one or more first codeword sets corresponding to one or more layers from the N/2 antenna ports and 1 layer to the N/2 antenna ports and N/2 layers; determining, according to the one or more first codeword sets, the plurality of codewords comprised in the pre-configuration information;
or
determining one or more codewords from the first codeword set corresponding to each layer for the N/2 antenna ports according to the Euclidean distance between codewords or the cosine similarity between codewords; determining, according to the division mode, one or more first codeword sets corresponding to one or more layers from the N/2 antenna ports and 1 layer to the N/2 antenna ports and N/2 layers; determining, according to one or more codewords determined from the one or more first codeword sets, the plurality of codewords comprised in the pre-configuration information.

5. The method of claim 4, wherein determining the one or more codewords from the first codeword set corresponding to each layer for the N/2 antenna ports comprises:

a, selecting any one codeword Wa from the first codeword set into a first codeword subset;
b, selecting a codeword Wb from the first codeword set into the first codeword subset, wherein the codeword Wb is a codeword with a minimum index among one or more codewords having a smallest cosine similarity with the codeword Wa in the first codeword set, or the codeword Wb is a codeword with a minimum index among one or more codewords having a largest Euclidean distance with the codeword Wa in the first codeword set;
c, selecting a codeword Wc from the first codeword set into the first codeword subset, wherein the codeword Wc is a codeword with a minimum index among remaining one or more codewords in the first codeword set, with a smallest sum in respective sums of cosine similarities between each of the remaining one or more codewords and codewords in the first codeword subset and with a smallest variance in respective variances of the cosine similarities between each of the remaining one or more codewords and codewords in the first codeword subset; or the codeword Wc is a codeword with a minimum index among remaining one or more codewords in the first codeword set, with a largest sum in respective sums of Euclidean distances between each of the remaining one or more codewords and codewords in the first codeword subset and with a smallest variance in respective variances of the Euclidean distances between each of the remaining one or more codewords and codewords in the first codeword subset; and

d, repeating step c until the number of codewords in the first codeword subset reaches a preset number, and using the codewords in the first codeword subset as the one or more codewords.

6. The method of claim 4, wherein all antenna ports are grouped into two groups including: a first antenna port group and a second antenna port group, and all antenna ports in the same antenna port group are used for the fully-coherent transmission and antenna ports from different antenna port groups are used for non-coherent transmission, the division mode comprises grouping the data of the L layers into either or both of a first group and a second group according to a preset rule, wherein the first group comprises the first antenna port group, and the second group comprises the second antenna port group.

7. The method of claim 4, wherein all antenna ports are grouped into four groups including: a first antenna port group, a second antenna port group, a third antenna port group and a fourth antenna port group, and all antenna ports in the same antenna port group are used for the fully-coherent transmission and antenna ports from different antenna port groups are used for non-coherent transmission, the division mode comprises grouping the data of the L layers into either or both of a first group and a second group according to a preset rule, wherein the first group comprises the first antenna port group and the second antenna port group, and the second group comprises the third antenna port group and the fourth antenna port group.

8. The method of claim 6 or 7, wherein data of $L_M$ layers in the data of the L layers is grouped into the first group and data of $L_N$ layers in the data of the L layers is grouped into the second group; determining one or more first codeword sets corresponding to one or more layers from the N/2 antenna ports and 1 layer to the N/2 antenna ports and N/2 layers comprises:

determining a first codeword set of N/2 antenna ports and $L_M$ layers and determining a first codeword set of N/2 antenna ports and $L_N$ layers; wherein $L_M$ and $L_N$ are all possible positive integers that satisfy a condition of $L_M + L_N = L$.

9. The method of claim 8, wherein in a case that L is less than or equal to N/2, $L_M$ and $L_N$ also satisfy any of following conditions:

an absolute value of $L_M$-$L_N$ is less than or equal to 1; or either one of $L_M$ and $L_N$ is equal to 0 and the other is equal to L.

10. The method of claim 8, wherein in a case that L is greater than N/2, $L_M$ and $L_N$ also satisfy any of following conditions:

$L_M$ and $L_N$ are positive integers less than or equal to N/2, and an absolute value of $L_M$-$L_N$ is less than or equal to 1; $L_M$ and $L_N$ are positive integers less than or equal to N/2, $L_M$ is less than or equal to $L_N$, and an absolute value of $L_M$-$L_N$ is less than or equal to 1; or $L_M$ and $L_N$ are positive integers less than or equal to N/2.

11. The method of claim 4, wherein determining the plurality of codewords comprised in the pre-configuration information comprises: determining the plurality of codewords comprised in the pre-configuration information by performing a combination transformation on codewords in the one or more first codeword sets or by performing a combination transformation on the one or more codewords.

12. The method of claim 11, wherein the precoding matrix indication information includes one codeword field, and the codeword field indicates one codeword in the pre-configuration information.

13. The method of claim 4, wherein determining the plurality of codewords comprised in the pre-configuration information comprises:
determining codewords in the one or more first codeword sets or the one or more codewords as the plurality of codewords comprised in the pre-configuration information.

14. The method of claim 1, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining codewords in the first codeword set corresponding to each layer for the N/2 antenna ports as the plurality of codewords comprised in the pre-configuration information.

15. The method of claim 13 or 14, wherein the precoding matrix indication information includes two codeword fields, and each codeword field indicates one codeword in the pre-configuration information.

16. A precoding matrix determination method, performed by a user equipment (UE) having N antenna ports and performing multiple-input multiple-output (MIMO) uplink transmission, wherein N is a positive even number, and the method comprises:

receiving precoding matrix indication information from a network device;
determining a partially-coherent codeword according to pre-configuration information and the precoding matrix indication information;
wherein the pre-configuration information comprises a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

17. The method of claim 16, wherein

a Euclidean distance between any two codewords in codewords comprised in the pre-configuration information is greater than a preset distance threshold, and an Euclidean distance between each two codewords comprised in the pre-configuration information is greater than an Euclidean distance between each two codeword not comprised in the pre-configuration information in the first codeword set;
or
a cosine similarity between any two codewords in codewords comprised in the pre-configuration information is less than a preset similarity threshold, and a cosine similarity between each two codewords comprised in the pre-configuration information is less than a cosine similarity between each two codewords not comprised in the pre-configuration information in the first codeword set.

18. The method of claim 16, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers and based on at least one of:

a codeword feature, wherein the codeword feature comprises a Euclidean distance between codewords or a cosine similarity between codewords; or
a division mode of data of L layers among antenna port groups, where L is a positive integer less than or equal to N.

19. The method of claim 18, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:

determining one or more codewords from the first codeword set corresponding to each layer for the N/2 antenna ports according to the Euclidean distance between codewords or the cosine similarity between codewords;
determining the plurality of codewords comprised in the pre-configuration information according to the one or more codewords;
or
determining, according to the division mode, one or more first codeword sets corresponding to one or more layers from the N/2 antenna ports and 1 layer to the N/2 antenna ports and N/2 layers; determining, according to the one or more first codeword sets, the plurality of codewords comprised in the pre-configuration information;
or

determining one or more codewords from the first codeword set corresponding to each layer for the N/2 antenna ports according to the Euclidean distance between codewords or the cosine similarity between codewords; determining, according to the division mode, one or more first codeword sets corresponding to one or more layers from the N/2 antenna ports and 1 layer to the N/2 antenna ports and N/2 layers; determining, according to one or more codewords determined from the one or more first codeword sets, the plurality of codewords comprised in the pre-configuration information.

20. The method of claim 19, wherein determining the one or more codewords from the first codeword set corresponding to each layer for the N/2 antenna ports comprises:

    a, selecting any one codeword Wa from the first codeword set into a first codeword subset;
    b, selecting a codeword Wb from the first codeword set into the first codeword subset, wherein the codeword Wb is a codeword with a minimum index among one or more codewords having a smallest cosine similarity with the codeword Wa in the first codeword set, or the codeword Wb is a codeword with a minimum index among one or more codewords having a largest Euclidean distance with the codeword Wa in the first codeword set;
    c, selecting a codeword Wc from the first codeword set into the first codeword subset, wherein the codeword Wc is a codeword with a minimum index among remaining one or more codewords in the first codeword set, with a smallest sum in respective sums of cosine similarities between each of the remaining one or more codewords and codewords in the first codeword subset and with a smallest variance in respective variances of the cosine similarities between each of the remaining one or more codewords and codewords in the first codeword subset; or the codeword Wc is a codeword with a minimum index among remaining one or more codewords in the first codeword set, with a largest sum in respective sums of Euclidean distances between each of the remaining one or more codewords and codewords in the first codeword subset and with a smallest variance in respective variances of the Euclidean distances between each of the remaining one or more codewords and codewords in the first codeword subset; and
    d. repeating step c until the number of codewords in the first codeword subset reaches a preset number, and using the codewords in the first codeword subset as the one or more codewords.

21. The method of claim 19, wherein all antenna ports are grouped into two groups including: a first antenna port group and a second antenna port group, and all antenna ports in the same antenna port group are used for the fully-coherent transmission and antenna ports from different antenna port groups are used for non-coherent transmission,
the division mode comprises grouping the data of the L layers into either or both of a first group and a second group according to a preset rule, wherein the first group comprises the first antenna port group, and the second group comprises the second antenna port group.

22. The method of claim 19, wherein all antenna ports are grouped into four groups including: a first antenna port group, a second antenna port group, a third antenna port group and a fourth antenna port group, and all antenna ports in the same antenna port group are used for the fully-coherent transmission and antenna ports from different antenna port groups are used for non-coherent transmission,
the division mode comprises grouping the data of the L layers into either or both of a first group and a second group according to a preset rule, wherein the first group comprises the first antenna port group and the second antenna port group, and the second group comprises the third antenna port group and the fourth antenna port group.

23. The method of claim 21 or 22, wherein data of $L_M$ layers in the data of the L layers is grouped into the first group and data of $L_N$ layers in data of the L layers is grouped into the second group;
determining one or more first codeword sets corresponding to one or more layers from the N/2 antenna ports and 1 layer to the N/2 antenna ports and N/2 layers comprises:

    determining a first codeword set of N/2 antenna ports and $L_M$ layers and determining a first codeword set of N/2 antenna ports and $L_N$ layers;
    $L_M$ and $L_N$ are all possible positive integers that satisfy a condition of $L_M + L_N = L$.

24. The method of claim 23, wherein in a case that L is less than or equal to N/2, $L_M$ and $L_N$ also satisfy any of following conditions:

    an absolute value of $L_M - L_N$ is less than or equal to 1; or
    either one of $L_M$ and $L_N$ is equal to 0 and the other is equal to L.

25. The method of claim 23, wherein in a case that L is greater than N/2, $L_M$ and $L_N$ also satisfy any of following conditions:

$L_M$ and $L_N$ are positive integers less than or equal to N/2, and an absolute value of $L_M$-$L_N$ is less than or equal to 1;
$L_M$ and $L_N$ are positive integers less than or equal to N/2, $L_M$ is less than or equal to $L_N$, and an absolute value of $L_M$-$L_N$ is less than or equal to 1; or
$L_M$ and $L_N$ are positive integers less than or equal to N/2.

26. The method of claim 19, wherein determining the plurality of codewords comprised in the pre-configuration information comprises:
determining the plurality of codewords comprised in the pre-configuration information by performing a combination transformation on codewords in the one or more first codeword sets or by performing a combination transformation on the one or more codewords.

27. The method of claim 26, wherein the precoding matrix indication information includes one codeword field, and the codeword field indicates one codeword in the pre-configuration information;
determining the partially-coherent codeword according to the pre-configuration information and the precoding matrix indication information comprises:
determining the partially-coherent codeword according to the codeword indicated by the codeword field of the precoding matrix indication information.

28. The method of claim 19, wherein determining the plurality of codewords comprised in the pre-configuration information comprises:
determining codewords in the one or more first codeword sets or the one or more codewords as the plurality of codewords comprised in the pre-configuration information.

29. The method of claim 16, wherein the pre-configuration information is determined according to the first codeword set that is used for the fully-coherent transmission or the partially-coherent transmission and corresponds to each layer from the N/2 antenna ports and 1 layer to the N/2 antenna ports and N/2 layers by:
determining codewords in the first codeword set corresponding to each layer for the N/2 antenna ports as the plurality of codewords comprised in the pre-configuration information.

30. The method of claim 28 or 29, wherein the precoding matrix indication information includes two codeword fields, and each codeword field indicates one codeword in the pre-configuration information;
determining the partially-coherent codeword according to the pre-configuration information and the precoding matrix indication information comprises:
determining the partially-coherent codeword by performing combination transformation on codewords indicated by the two codeword fields of the precoding matrix indication information.

31. A precoding matrix indication apparatus, applied in a network device, comprising a communication module, configured to:

send, according to pre-configuration information, precoding matrix indication information to a user equipment (UE) having N antenna ports and performing multiple-input multiple-output (MIMO) uplink transmission, where N is a positive even number;
wherein the pre-configuration information comprises a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

32. A precoding matrix determination apparatus, applied in a user equipment (UE) having N antenna ports and performing multiple-input multiple-output (MIMO) uplink transmission, wherein N is a positive even number, comprising:

a communication module, configured to receive precoding matrix indication information from a network device; and
a processing module, configured to determine a partially-coherent codeword according to pre-configuration information and the precoding matrix indication information;
wherein the pre-configuration information comprises a plurality of codewords determined according to a first codeword set that is used for fully-coherent transmission or partially-coherent transmission and corresponds to each layer from N/2 antenna ports and 1 layer to N/2 antenna ports and N/2 layers corresponding to the MIMO uplink transmission.

33. A communication device, comprising: a transceiver, a memory, and a processor connected to the transceiver and the memory, respectively, wherein the processor is configured to execute computer-executable instructions on the memory, to control transmission and reception of radio signals of the transceiver and perform the method of any one of claims 1 to 30.

34. A communication system, comprising: a user equipment and a network device, wherein the network device is configured to perform the method of any one of claims 1 to 15, and the user equipment is configured to perform the method of any one of claims 16 to 30.

35. A computer storage medium having computer-executable instructions stored thereon, wherein when the computer-executable instructions are executed by a processor, the method of any one of claims 1 to 30 is implemented.

Communication system 100

| UE 101 | Network device 102 |

FIG. 1

| UE 101 | | Network device 102 |

S201: according to pre-configuration information, sending precoding matrix indication information

S202: determining a partially-coherent codeword according to the pre-configuration information and the precoding matrix indication information

FIG. 2

FIG. 3

according to pre-configuration information, sending precoding matrix indication information to a UE 101 having N antenna ports and performing MIMO uplink transmission ⎯S401

FIG. 4

receiving precoding matrix indication information is received from a network device ⎯S501

↓

determin i n g a partially-coherent codeword according to the pre-configuration information and the precoding matrix indication information ⎯S502

FIG. 5

receiving precoding matrix indication information is received from a network device, in which the precoding matrix indication information may include one codeword field ⎯S601

↓

determin i n g the codeword indicated by the codeword filed of the precoding matrix indication information as a partially-coherent codeword ⎯S602

FIG. 6

receiving precoding matrix indication information is received from a network device, in which the precoding matrix indication information may include two codeword fields ⎯S701

↓

determin i n g a partially-coherent codeword by performing a combination transformation on the codewords indicated by the two codeword fields of the precoding matrix indication information ⎯S702

FIG. 7

800

| precoding matrix indication apparatus |
|---|
| communication module 801 |

FIG. 8

900

| precoding matrix indication apparatus |
|---|
| communication module 901 |
| processing module 902 |

FIG. 9

1000

processor 1001

memory 1002

transceiver 1003

interface 1004

FIG. 10

1100

1101

processor

1102

interface

1103

memory

FIG. 11

## INTERNATIONAL SEARCH REPORT

| | International application No. |
|---|---|
| | **PCT/CN2023/087138** |

| A. | CLASSIFICATION OF SUBJECT MATTER |
|---|---|

H04B 7/0456(2017.01)i

According to International Patent Classification (IPC) or to both national classification and IPC

| B. | FIELDS SEARCHED |
|---|---|

Minimum documentation searched (classification system followed by classification symbols)

IPC:H04B H04L H04W

Documentation searched other than minimum documentation to the extent that such documents are included in the fields searched

Electronic data base consulted during the international search (name of data base and, where practicable, search terms used)

CNTXT, ENTXT, ENTXTC, DWPI: 码字, 码本, 余弦相似度, 欧氏距离, 马氏距离, 巴氏距离, 端口, 组, 层, codeword, book, cosine similarity, Euclidean Distance, port, group, layer

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112751597 A (HUAWEI TECHNOLOGIES CO., LTD.) 04 May 2021 (2021-05-04) description, paragraphs 198-215 | 1, 14-16, 29-35 |
| A | CN 111555784 A (BEIJING UNIVERSITY OF POSTS AND TELECOMMUNICATIONS) 18 August 2020 (2020-08-18) entire document | 1-35 |
| A | US 2019028158 A1 (LG ELECTRONICS, INC.) 24 January 2019 (2019-01-24) entire document | 1-35 |
| A | US 2019089441 A1 (NEC CORP.) 21 March 2019 (2019-03-21) entire document | 1-35 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2023** | **20 December 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/087138**

| Patent document cited in search report | | | Publication date (day/month/year) | Patent family member(s) | | | Publication date (day/month/year) |
|---|---|---|---|---|---|---|---|
| CN | 112751597 | A | 04 May 2021 | WO | 2021083285 | A1 | 06 May 2021 |
| | | | | EP | 4044445 | A1 | 17 August 2022 |
| | | | | IN | 202227024583 | A | 02 September 2022 |
| | | | | US | 2022337295 | A1 | 20 October 2022 |
| CN | 111555784 | A | 18 August 2020 | | None | | |
| US | 2019028158 | A1 | 24 January 2019 | EP | 3327945 | A1 | 30 May 2018 |
| | | | | WO | 2017014611 | A1 | 26 January 2017 |
| | | | | KR | 20180025941 | A | 09 March 2018 |
| US | 2019089441 | A1 | 21 March 2019 | WO | 2016051792 | A1 | 07 April 2016 |

Form PCT/ISA/210 (patent family annex) (July 2022)